(19) Europäisches Patentamt / European Patent Office / Office européen des brevets

(11) **EP 4 622 132 A1**

(12) **EUROPEAN PATENT APPLICATION**
published in accordance with Art. 153(4) EPC

(43) Date of publication:
**24.09.2025 Bulletin 2025/39**

(51) International Patent Classification (IPC):
*H04B 7/185* (2006.01)

(21) Application number: **23905677.3**

(52) Cooperative Patent Classification (CPC):
**H04B 7/185**

(22) Date of filing: **04.12.2023**

(86) International application number:
**PCT/CN2023/136115**

(87) International publication number:
**WO 2024/131510 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 CN 202211638653**

(71) Applicant: **Huawei Technologies Co., Ltd.**
**Shenzhen, Guangdong 518129 (CN)**

(72) Inventors:
• **ZHANG, Xiaoyu**
**Shenzhen, Guangdong 518129 (CN)**
• **LIAO, Shuri**
**Shenzhen, Guangdong 518129 (CN)**
• **DOU, Shengyue**
**Shenzhen, Guangdong 518129 (CN)**
• **SHI, Meng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **SIGNAL TRANSMISSION METHOD AND APPARATUS**

(57) This application provides a signal transmission method and an apparatus. In the method, a network device determines M first beams from L first beams with different central directions, where L is an integer greater than 1, and M is an integer less than L and greater than 1; separately broadens the M first beams to obtain M second beams; and separately performs signal transmission with a terminal device by using the M second beams. A maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated. The method can reduce a quantity of beams on which the network device performs beam sweeping, and further reduce a beam sweeping duration.

Signal transmission method 100

```
Network device                              Terminal device

S101: The network device determines
M first beams from L first beams with
different central directions, where L is
an integer greater than 1, and M is an
integer less than L and greater than 1

S102: The network device separately
broadens the M first beams to obtain
M second beams, where the M second
beams are in one-to-one
correspondence with the M first beams

S103: The network device separately performs
signal transmission with the terminal device by using
the M second beams
```

FIG. 11

EP 4 622 132 A1

**Description**

This application claims priority to Chinese Patent Application No. 202211638653.3, filed with the China National Intellectual Property Administration on December 20, 2022 and entitled "SIGNAL TRANSMISSION METHOD AND APPARATUS", which is incorporated herein by reference in its entirety.

**TECHNICAL FIELD**

This application relates to the communication field, and in particular, to a signal transmission method and an apparatus.

**BACKGROUND**

A non-terrestrial network (non-terrestrial network, NTN) is a network that uses a radio frequency resource on a platform such as a satellite platform, an unmanned aerial vehicle platform, or a high altitude communication platform to perform a communication service. Compared with a terrestrial communication system, an NTN system is featured with ultra-large coverage on the ground. In addition, ultra-long-distance transmission from the NTN system to the ground causes a large loss. A satellite is used as an example. To reduce the loss, a super-large-scale antenna array may be disposed on the satellite, and a sufficiently high transmit and receive array gain is provided by increasing a quantity of antennas. In the antenna array, a coverage area of a single beam on the ground is small. If the entire coverage of the satellite on the ground is divided into coverage of several beams with equal areas on the ground, a large quantity of beams are required to implement ultra-large coverage of the satellite on the ground.

For example, a satellite 600 kilometers (kilometer, km) away from the ground has a coverage area of about 2.27 million square kilometers on the ground, and a matrix array with $40 \times 40 = 1600$ antenna elements may provide an array gain of more than 30 decibels (decibel, dB). A 3 dB beamwidth of a beam of the antenna array in a sub satellite point direction is about 1.5°, and a corresponding coverage area on the ground is 530 square kilometers. Therefore, about 4300 beams are required by the satellite to cover 2.27 million square kilometers on the ground. In a scenario in which a frequency is 3 gigahertz to 6 gigahertz (gigahertz, GHz) and a subcarrier spacing is 30 kilohertz (kilohertz, kHz), it is agreed that beam sweeping may be performed for eight beams in a periodicity of 20 milliseconds (millisecond, ms). In this case, a duration for performing beam sweeping for 4300 beams is 2.56 seconds (second, s). A total delay of initial access of a terminal device is generally about two to three sweeping durations, and therefore the total delay of initial access is about 5.12s to 7.68s.

It can be learned that, during initial access of the terminal device, a duration for performing beam sweeping by a satellite on a large quantity of beams is long, and consequently an initial access delay of the terminal device is long.

**SUMMARY**

Embodiments of this application provide a signal transmission method and an apparatus. This can reduce a duration for performing beam sweeping by a satellite during initial access of a terminal device, and further reduce an initial access delay of the terminal device.

According to a first aspect, an embodiment of this application provides a signal transmission method. The method may be applied to a network device, or may be applied to a chip in the network device, or may be applied to a logical module or software that can implement all or some functions of the network device. The following uses the network device as an example for description. The method includes: The network device determines M first beams from L first beams with different central directions, where L is an integer greater than 1, and M is an integer less than L and greater than 1. The network device separately broadens the M first beams to obtain M second beams, where the M second beams are in one-to-one correspondence with the M first beams. The network device separately performs signal transmission with a terminal device by using the M second beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

It can be learned that ground coverage of each second beam whose gain is the first value in the M second beams is greater than ground coverage of the first beam whose gain is the first value and that corresponds to the second beam, so that total ground coverage of the M second beams whose gains are the first value is not less than total ground coverage of the L first beams whose gains are the first value. Compared with a manner in which the network device separately performs signal transmission by using the L first beams, on the premise that ground coverage is not less than ground coverage of the L first beams, this method can reduce a quantity of beams used by the network device to perform signal transmission, that is, reduce a quantity of beams on which the network device performs beam sweeping, and further reduce a duration for performing beam sweeping by the network device, thereby reducing an initial access delay of the terminal device in a scenario in which the signal transmission method is applied to initial access of the terminal device.

In an optional implementation, that the network device separately performs signal transmission with a terminal device by using the M second beams includes: The network device separately performs signal transmission with the terminal device by using the M second beams on $R_1$ different time domain resources, where $R_1$ is a positive integer less than M. N second beams in the M second beams are used on each of the $R_1$ time domain resources, and different second beams are used on different time domain resources in the $R_1$ time domain resources. The N second beams on each time domain resource are used to perform signal transmission through N radio frequency channels, where N is an integer less than or equal to M.

It can be learned that, when N is greater than 1, the network device may separately perform, through a plurality of radio frequency channels, signal transmission by using a plurality of second beams on a same time domain resource. Compared with a manner in which the network device occupies different time domain resources to separately perform signal transmission by using a plurality of beams, this reduces time domain resources occupied by the network device to separately perform signal transmission by using a plurality of beams. In other words, this implementation can further reduce a duration for performing beam sweeping by the network device, and can further reduce an initial access delay of the terminal device in a scenario in which this implementation is applied to initial access of the terminal device.

In an optional implementation, the signal includes a synchronization signal block (synchronization signal block, SSB); SSB indexes of SSBs sent by using the N second beams on each time domain resource are the same; and a quantity of SSB indexes of SSBs sent by using the M second beams on the $R_1$ time domain resources is equal to $R_1$. In other words, SSBs sent by the network device on a same time domain resource in a plurality of time domain resources may use a same SSB index. Compared with a manner in which the network device occupies different time domain resources to separately send an SSB by using a plurality of beams and SSB indexes of the SSBs sent on the different time domain resources are different, because fewer time domain resources are occupied to separately perform signal transmission by using the L first beams, this implementation makes a total quantity of SSB indexes required by the network device to separately send an SSB by using the L first beams smaller, and can further reduce a quantity of bits occupied by an SSB index in information that is sent by the network device to the terminal device and that carries the SSB index.

In an optional implementation, the N second beams used on each time domain resource include $N_1$ second beams whose ground coverage is adjacent to each other in the M second beams, where $N_1$ is a positive integer less than or equal to N. There may be an overlapping region between two second beams whose ground coverage is adjacent to each other. A gain of the network device in the overlapping region is obtained by superposing gains of the two second beams respectively in the overlapping region. It can be learned that this implementation can increase the gain of the network device in the overlapping region, and can further increase a signal-to-noise ratio of a signal received by a terminal device in the overlapping region from the network device and a signal-to-noise ratio of a signal received by the network device from the terminal device in the overlapping region, thereby increasing a success rate of correctly demodulating a signal.

In an optional implementation, the N second beams used on each time domain resource include $N_2$ second beams and $N_3$ second beams in the M second beams, where a sum of $N_2$ and $N_3$ is less than or equal to N, and both $N_2$ and $N_3$ are positive integers less than N; ground coverage of the $N_2$ second beams is not adjacent to ground coverage of the $N_3$ second beams; and a distance between ground coverage of each of the $N_2$ second beams and a reference point of ground coverage of the M second beams is less than a distance between ground coverage of each of the $N_3$ second beams and the reference point. In other words, the N second beams used on the same time domain resource may include the $N_2$ second beams that are closer to the reference point and the $N_3$ second beams that are farther from the reference point.

When the reference point is a location with a shortest distance from the network device in total ground coverage of the M second beams, a path loss of separately performing signal transmission by using the $N_2$ second beams is less than a path loss of separately performing signal transmission by using the $N_3$ second beams. This implementation helps the network device adjust beam power of the $N_2$ second beams to beam power of the $N_3$ second beams, to balance a signal-to-noise ratio of a signal received by a terminal device located in the ground coverage of the $N_2$ second beams and a signal-to-noise ratio of a signal received by a terminal device located in the ground coverage of the $N_3$ second beams. Therefore, while it can be ensured that the terminal device located in the ground coverage of the $N_2$ second beams can correctly demodulate a signal, the signal-to-noise ratio of the signal received by the terminal device located in the ground coverage of the $N_3$ second beams can be increased, thereby increasing a success rate of correctly demodulating the signal by the terminal device located in the ground coverage of the $N_3$ second beams.

In an optional implementation, a location of the network device at a first moment is different from a location of the network device at a second moment. The method further includes: For each of the M second beams, the network device adjusts a central direction of the second beam at the second moment based on ground coverage of the second beam at the first moment and a moving distance of the network device from the first moment to the second moment. The network device determines M third beams from the L first beams based on an adjusted central direction of each of the M second beams at the second moment, and separately broadens the M third beams to obtain M fourth beams. The network device separately performs signal transmission with the terminal device at the second moment by using the M fourth beams.

The M fourth beams may be in one-to-one correspondence with the M third beams, and the M third beams may be in one-to-one correspondence with the M second beams. In this implementation, ground coverage of each of the M second beams at the second moment may include ground coverage of the second beam at the first moment. Therefore, when a central direction of each of the M third beams is the same as an adjusted central direction of a second beam corresponding to the third beam, it can be ensured that ground coverage of each of the M fourth beams can include ground coverage of a second beam corresponding to the fourth beam, so that terminal devices located in a same range can still correctly demodulate a signal from the network device at the second moment after the network device moves, and the network device can still correctly demodulate, after the movement, signals from the terminal devices located in a range same before the movement.

In an optional implementation, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

Because ground coverage of the beam used by the network device to perform signal transmission at the second moment in the first periodicity includes ground coverage of the beam used by the network device to perform signal transmission at the first moment, in this implementation, ground coverage of the beam used by the network device to perform signal transmission at the moment corresponding to the second moment in the second periodicity may include ground coverage of the beam used by the network device to perform signal transmission at the moment that is in the second periodicity and that corresponds to the first moment. Therefore, after the network device moves in the second periodicity, terminal devices located in a same range can still correctly demodulate a signal from the network device, and the network device can still correctly demodulate signals from the terminal devices located in a same range before the movement. In addition, the network device may not adjust a central direction of a beam in the second periodicity, but directly uses a beam used at a corresponding moment in the first periodicity. This further helps reduce calculation overheads of the network device.

According to a second aspect, an embodiment of this application provides a signal transmission method. The method may be applied to a network device, or may be applied to a chip in the network device, or may be applied to a logical module or software that can implement all or some functions of the network device. The following uses the network device as an example for description. The method includes: The network device determines $R_2$ time domain resources; and the network device separately performs signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

It can be learned that, when K is greater than 1, the network device may separately perform, through a plurality of radio frequency channels, signal transmission by using a plurality of first beams on a same time domain resource. Compared with a manner in which the network device occupies different time domain resources to separately perform signal transmission by using the L first beams, this reduces time domain resources occupied by the network device to separately perform signal transmission by using the L first beams. In other words, the method can reduce a duration for performing beam sweeping by the network device on the L first beams, and can further reduce an initial access delay of the terminal device in a scenario in which the method is applied to initial access of the terminal device.

In an optional implementation, the signal includes an SSB; SSB indexes of SSBs sent by using the K first beams on each time domain resource are the same; and a quantity of SSB indexes of SSBs sent by using the L first beams on the $R_2$ time domain resources is equal to $R_2$. In other words, SSB indexes of SSBs sent by the network device on a same time domain resource may be the same. Compared with a manner in which the network device occupies different time domain resources to separately send an SSB by using the L first beams and SSB indexes of the SSBs sent on the different time domain resources are different, this reduces a total quantity of SSB indexes required by the network device to separately send an SSB by using the L first beams, and further reduces a quantity of bits occupied by an SSB index in a signal that is sent by the network device to the terminal device and that carries the SSB index.

In an optional implementation, the K first beams on each time domain resource include $K_1$ first beams whose ground coverage is adjacent to each other in the L first beams, where $K_1$ is a positive integer less than or equal to K. There may be an overlapping region between two second beams whose ground coverage is adjacent to each other. A gain of the network device in the overlapping region is obtained by superposing gains of the two second beams respectively in the overlapping region. It can be learned that this implementation can increase the gain of the network device in the overlapping region, and can further increase a signal-to-noise ratio of a signal received by a terminal device in the overlapping region from the network device and a signal-to-noise ratio of a signal received by the network device from the terminal device in the overlapping region, thereby increasing a success rate of correctly demodulating a signal.

In an optional implementation, the K first beams on each time domain resource include $K_2$ first beams and $K_3$ first beams in the L first beams; a sum of $K_2$ and $K_3$ is less than or equal to K, and both $K_2$ and $K_3$ are positive integers less than K; ground coverage of the $K_2$ first beams is not adjacent to ground coverage of the $K_3$ first beams; and a distance between ground coverage of each of the $K_2$ first beams and a reference point of ground coverage of the L first beams is less than a distance between ground coverage of each of the $K_3$ first beams and the reference point. In other words, the K first beams used on the same time domain resource may include the $K_2$ first beams that are closer to the reference point and the $K_3$ first beams that are farther from the reference point.

When the reference point is a location with a shortest distance from the network device in total ground coverage of the L first beams, a path loss of separately performing signal transmission by using the $K_2$ first beams is less than a path loss of separately performing signal transmission by using the $K_3$ first beams. This implementation helps the network device adjust beam power of the $K_2$ first beams to beam power of the $K_3$ first beams, to balance a signal-to-noise ratio of a signal received by a terminal device located in the ground coverage of the $K_2$ first beams and a signal-to-noise ratio of a signal received by a terminal device located in the ground coverage of the $K_3$ first beams. Therefore, the signal-to-noise ratio of the signal received by the terminal device located in the ground coverage of the $K_3$ first beams can be increased on the premise that it can be ensured that the terminal device located in the ground coverage of the $K_2$ first beams can correctly demodulate a signal, thereby increasing a success rate of correctly demodulating the signal by the terminal device located in the ground coverage of the $K_3$ first beams.

According to a third aspect, an embodiment of this application provides a signal transmission method. The method may be applied to a network device, or may be applied to a chip in the network device, or may be applied to a logical module or software that can implement all or some functions of the network device. The following uses the network device as an example for description. The method includes: For each of L first beams with different directions, the network device adjusts a central direction of the first beam at a second moment based on ground coverage of the first beam at a first moment and a moving distance of the network device from the first moment to the second moment, where the first moment and the second moment are moments in a first periodicity, and L is an integer greater than 1; the network device separately performs signal transmission with a terminal device at the second moment by using the L first beams with adjusted central directions; the network device separately performs, by using the L first beams, signal transmission with the terminal device at a moment that is in a second periodicity and that corresponds to the first moment; and the network device separately performs, by using the L first beams with the adjusted central directions, signal transmission with the terminal device at a moment that is in the second periodicity and that corresponds to the second moment.

It can be learned that ground coverage of each of the L first beams at the second moment includes the ground coverage of the first beam at the first moment. Compared with a manner in which the network device does not adjust the central direction of the first beam at the second moment, the method can increase a signal-to-noise ratio of a signal that is received, from the network device at the second moment, by a terminal device located in the ground coverage of the first beam at the first moment, or increase a signal-to-noise ratio of a signal that is received by the network device at the second moment from the terminal device located in the ground coverage of the first beam at the first moment. In addition, the network device may not perform an operation of adjusting a central direction of a beam in the second periodicity, and directly uses a beam used at a corresponding moment in the first periodicity. This further helps reduce calculation overheads of the network device.

According to a fourth aspect, this application further provides a communication apparatus. The communication apparatus has functions of implementing some or all of the implementations of the first aspect, or has functions of implementing some or all of the function implementations of the second aspect, or has functions of implementing some or all of the function implementations of the third aspect. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The processing unit may be configured to control the communication unit to perform data/signaling receiving and sending. The communication unit is configured to support communication between the communication apparatus and another communication apparatus. The communication apparatus may further include a storage unit. The storage unit is coupled to the processing unit and the communication unit, and is configured to store program instructions and data that are necessary for the communication apparatus.

In an implementation, the processing unit is configured to determine M first beams from L first beams with different central directions, where L is an integer greater than 1, and M is an integer less than L and greater than 1.

The processing unit is further configured to separately broaden the M first beams to obtain M second beams, where the M second beams are in one-to-one correspondence with the M first beams.

The communication unit is configured to separately perform signal transmission with a terminal device by using the M second beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

In addition, for another optional implementation of the communication apparatus in this aspect, refer to related content of the first aspect. Details are not described herein again.

In another implementation, the processing unit is configured to determine $R_2$ time domain resources.

The communication unit is configured to separately perform signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

In addition, for another optional implementation of the communication apparatus in this aspect, refer to related content of the second aspect. Details are not described herein again.

In another implementation, the processing unit is configured to: for each of L first beams with different directions, adjust a central direction of the first beam at a second moment based on ground coverage of the first beam at a first moment and a moving distance of the network device from the first moment to the second moment, where the first moment and the second moment are moments in a first periodicity, and L is an integer greater than 1.

The communication unit is configured to separately perform signal transmission with a terminal device at the second moment by using the L first beams with adjusted central directions.

The communication unit is further configured to separately perform, by using the L first beams, signal transmission with the terminal device at a moment that is in a second periodicity and that corresponds to the first moment.

The communication unit is further configured to separately perform, by using the L first beams with the adjusted central directions, signal transmission with the terminal device at a moment that is in the second periodicity and that corresponds to the second moment.

In addition, for another optional implementation of the communication apparatus in this aspect, refer to related content of the third aspect. Details are not described herein again.

In an example, the communication unit may be a transceiver or a communication interface, the storage unit may be a memory, and the processing unit may be a processor. The processor may be configured to perform the method according to the first aspect, the second aspect, the third aspect, or the fourth aspect by using a logic circuit or by running a computer program. The transceiver may be configured to receive and send a signal. The memory may be configured to store a computer program.

In an implementation, the processor is configured to determine M first beams from L first beams with different central directions, where L is an integer greater than 1, and M is an integer less than L and greater than 1.

The processor is further configured to separately broaden the M first beams to obtain M second beams, where the M second beams are in one-to-one correspondence with the M first beams.

The transceiver is configured to separately perform signal transmission with a terminal device by using the M second beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

In addition, for another optional implementation of the communication apparatus in this aspect, refer to related content of the first aspect. Details are not described herein again.

In another implementation, the processor is configured to determine $R_2$ time domain resources.

The transceiver is configured to separately perform signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

In addition, for another optional implementation of the communication apparatus in this aspect, refer to related content of the second aspect. Details are not described herein again.

In another implementation, the processor is configured to: for each of L first beams with different directions, adjust a central direction of the first beam at a second moment based on ground coverage of the first beam at a first moment and a moving distance of the network device from the first moment to the second moment, where the first moment and the second moment are moments in a first periodicity, and L is an integer greater than 1.

The transceiver is configured to separately perform signal transmission with a terminal device at the second moment by using the L first beams with adjusted central directions.

The transceiver is further configured to separately perform, by using the L first beams, signal transmission with the terminal device at a moment that is in a second periodicity and that corresponds to the first moment.

The transceiver is further configured to separately perform, by using the L first beams with the adjusted central directions, signal transmission with the terminal device at a moment that is in the second periodicity and that corresponds to the second moment.

In addition, for another optional implementation of the communication apparatus in this aspect, refer to related content of the third aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of an integrated circuit technology, more components may be integrated on a same chip. For example, the digital baseband processor and a plurality of application processors (for example, but not limited to, a graphics processing unit and a multimedia processor) may be integrated on a same chip. Such a chip may be referred to as a system-on-a-chip (system-on-a-chip, SoC). Whether the components are independently disposed on different chips or are integrated and disposed on one or more chips usually depends on a requirement of a product design. This embodiment of this application imposes no limitation on implementations of the foregoing components.

According to a fifth aspect, this application further provides a processor, configured to perform the foregoing methods. In a process of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to the transceiver, so that the transceiver performs transmission. After the foregoing signal is output by the processor, other processing may further need to be performed on the signal, and then the signal arrives at the transceiver. Similarly, when the processor receives the input signal, the transceiver receives the signal, and inputs the signal into the processor. Further, after the transceiver receives the foregoing signal, other processing may need to be performed on the signal, and then the signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a sixth aspect, this application further provides a communication system. The system includes at least one network device and at least one terminal device in the foregoing aspects. In another possible design, the system may further include another device that interacts with the network device and/or the terminal device in the solutions provided in this application.

According to a seventh aspect, this application provides a computer-readable storage medium, configured to store instructions. When the instructions are run by a computer, the method according to any one of the first aspect, the second aspect, or the third aspect is performed.

According to an eighth aspect, this application further provides a computer program product including instructions. When the computer program product runs on a computer, the method according to any one of the first aspect, the second aspect, or the third aspect is performed.

According to a ninth aspect, this application provides a chip system. The chip system includes a processor and an interface. The interface is configured to obtain a program or instructions. The processor is configured to invoke the program or the instructions to implement the functions in the first aspect, or is configured to invoke the program or the instructions to implement the functions in the second aspect, or is configured to invoke the program or the instructions to implement the functions in the third aspect. In a possible design, the chip system further includes a memory. The memory is configured to store program instructions and data that are necessary for a terminal. The chip system may include a chip, or may include a chip and another discrete component.

**BRIEF DESCRIPTION OF DRAWINGS**

FIG. 1 is a diagram of a transparent forwarding scenario in a satellite communication network according to an embodiment of this application;
FIG. 2 is a diagram of a regenerative scenario in a satellite communication network according to an embodiment of this application;
FIG. 3 is a diagram of a structure of a communication system according to an embodiment of this application;
FIG. 4 is a diagram of coverage of a satellite on the ground according to an embodiment of this application;
FIG. 5 is a directivity pattern of a satellite antenna in a pitch direction according to an embodiment of this application;
FIG. 6 is a diagram of initial access according to an embodiment of this application;
FIG. 7 is a diagram of a synchronization signal block (synchronization signal block, SSB) sending pattern according to an embodiment of this application;
FIG. 8 is a diagram of another SSB sending pattern according to an embodiment of this application;
FIG. 9 is a diagram of another SSB sending pattern according to an embodiment of this application;
FIG. 10 is a diagram of ground coverage of a beam when a satellite moves according to an embodiment of this application;
FIG. 11 is a schematic flowchart of a signal transmission method 100 according to an embodiment of this application;
FIG. 12 is a diagram of a first beam and a second beam corresponding to the first beam according to an embodiment of this application;
FIG. 13 is a gain directivity pattern of a first beam and a second beam corresponding to the first beam according to an embodiment of this application;
FIG. 14 is a diagram of ground coverage according to an embodiment of this application;
FIG. 15 is a diagram of superposition of gains of a second beam #1 and a second beam #2 according to an embodiment of this application;
FIG. 16 is another diagram of ground coverage according to an embodiment of this application;
FIG. 17 is another diagram of ground coverage of a beam when a satellite moves according to an embodiment of this application;
FIG. 18 is a schematic flowchart of a signal transmission method 200 according to an embodiment of this application;
FIG. 19 is a schematic flowchart of a signal transmission method 300 according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of a chip according to an embodiment of this application.

**DESCRIPTION OF EMBODIMENTS**

The following clearly and completely describes the technical solutions in embodiments of this application with reference to the accompanying drawings in embodiments of this application.
To better understand a signal transmission method disclosed in embodiments of this application, a communication system to which embodiments of this application are applicable is described.
Embodiments of this application may be applied to a 4th generation (4th generation, 4G) communication system, for example, a long term evolution (long term evolution, LTE) system, and a 5th generation (5th generation, 5G) communication system, for example, a new radio (new radio, NR) system. With continuous development of communication technologies, the technical solutions in embodiments of this application may be further applied to subsequently evolved communication systems, for example, a 6th generation (6th Generation, 6G) mobile communication technology system and a 7th generation (7th Generation, 7G) mobile communication technology system. Embodiments of this application may be further applied to a non-terrestrial network (non-terrestrial network, NTN). For example, embodiments of this application may be applied to a transparent forwarding (bent pipe) scenario and a regenerative (regenerative) scenario in a satellite communication network. A satellite in the transparent forwarding scenario has a frequency conversion forwarding function. A satellite in the regenerative scenario includes a next-generation NodeB (next-generation NodeB, gNB) or a data unit (data unit, DU), and has a function of the gNB or the DU.

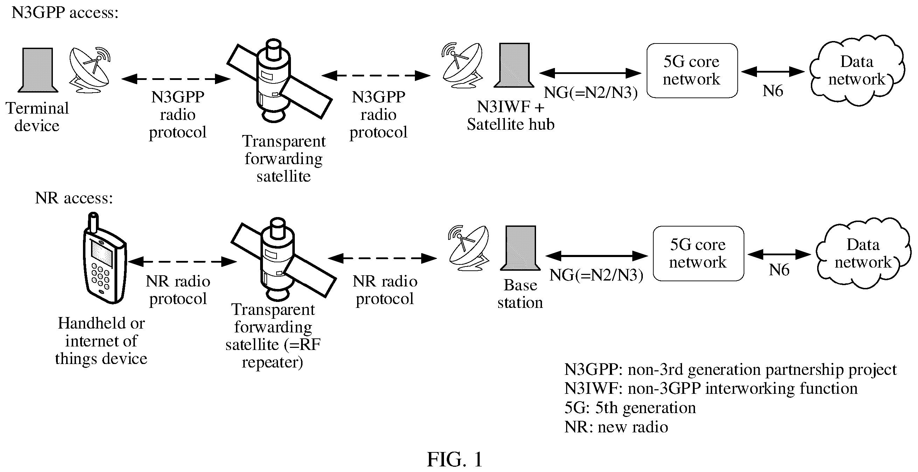

FIG. 1 is a diagram of a transparent forwarding scenario in a satellite communication network according to an embodiment of this application. In the transparent forwarding scenario, a terminal device may access a satellite through non-3rd generation partnership project (non-3rd generation partnership project, N3GPP) or directly access a satellite through NR. In these two cases, an air interface delay is twice an air-to-ground transmission delay. The following describes transparent forwarding scenarios in these two cases with reference to FIG. 1.

In the case in which a terminal device accesses a satellite through N3GPP, a system architecture in the transparent forwarding scenario may include a terminal device, a transparent forwarding satellite (bent pipe satellite), a satellite hub (satellite hub) having a non-3GPP interworking function (Non-3GPP Interworking Function, N3IWF), a 5G core network (5G core network), and a data network (data network). The terminal device may communicate with the transparent forwarding satellite and the satellite hub may communicate with the transparent forwarding satellite based on the non-3GPP radio protocol (Non-3GPP radio protocol), the satellite hub may communicate with the 5G core network based on an NG interface (for example, an N2 interface or an N3 interface), and the 5G core network may communicate with the data network based on an N6 interface.

In the case in which a terminal device directly accesses a satellite through NR, a system architecture in the transparent forwarding scenario may include a handheld or internet of things device (handheld or IoT device), a transparent forwarding satellite that can serve as a radio frequency repeater (radio frequency repeater, RF repeater), a gNB, a 5G core network, and a data network. The handheld or internet of things device may communicate with the transparent forwarding satellite and the gNB may communicate with the transparent forwarding satellite based on the NR radio protocol (NR radio protocol), the gNB may communicate with the 5G core network based on an NG interface (for example, an N2 interface or an N3 interface), and the 5G core network may communicate with the data network based on an N6 interface.

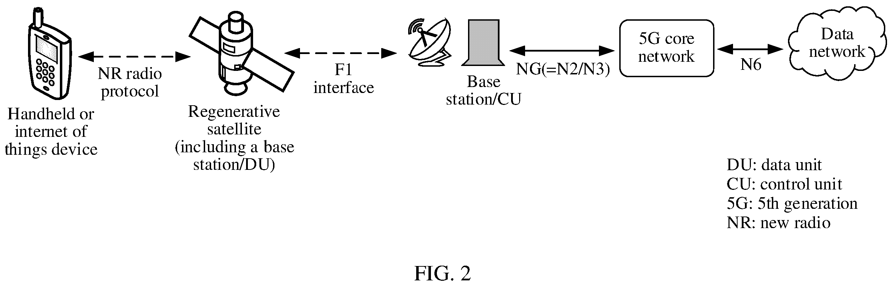

FIG. 2 is a diagram of a regenerative scenario in a satellite communication network according to an embodiment of this application. An air interface delay in the regenerative scenario is one time an air-to-ground transmission delay. A system architecture in the regenerative scenario may include a handheld or internet of things device, a regenerative satellite (regenerative satellite) including a gNB or a DU, a gNB/control unit (control unit, CU), a 5G core network, and a data network. The handheld or internet of things device may communicate with the regenerative satellite based on the NR radio protocol, the regenerative satellite may communicate with the gNB/CU based on an F1 interface (interface), the gNB/CU may communicate with the 5G core network based on an NG interface (for example, an N2 interface or an N3 interface), and the 5G core network may communicate with the data network based on an N6 interface.

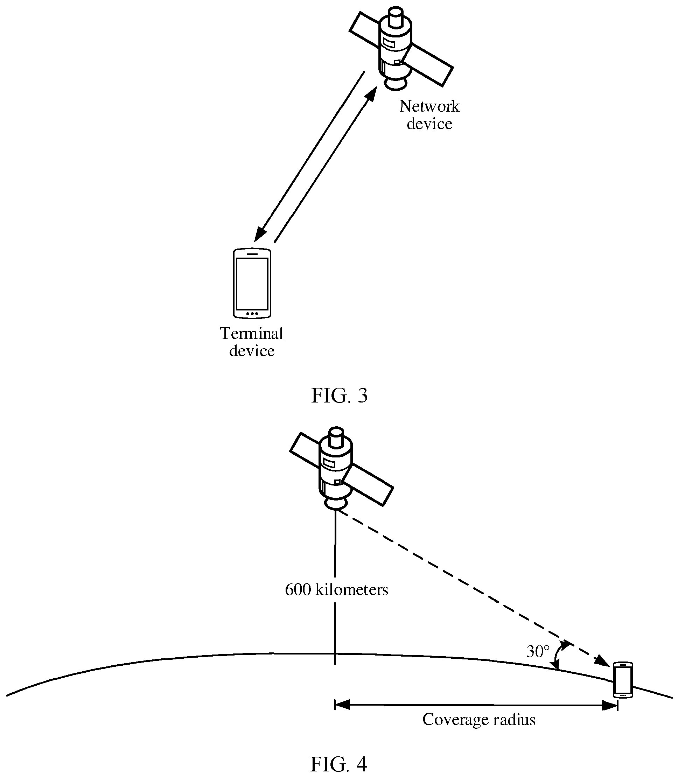

FIG. 3 is a diagram of a structure of a communication system according to an embodiment of this application. The communication system may include but is not limited to one terminal device and one network device. Quantities and forms of devices shown in FIG. 3 are used as examples and do not constitute a limitation on embodiments of this application. During actual application, two or more terminal devices and two or more network devices may be included. The communication system shown in FIG. 3 is described by using one network device and one terminal device as an example. In FIG. 3, for example, the network device is a device in a satellite network, and the terminal device is a mobile phone.

In this embodiment of this application, the network device may be a device having a wireless transceiver function in an NTN, for example, a device having a wireless transceiver function in the satellite network. The network device may be a satellite base station. For example, the network device may be an evolved NodeB (NodeB, eNB, or eNodeB, evolved NodeB) in LTE, a gNodeB (gNodeB or gNB) or a transmission reception point (transmission receiving point/transmission reception point, TRP) in NR, a base station that is subsequently evolved in the 3GPP, an access node in a Wi-Fi system, a wireless relay node, a wireless backhaul node, or the like that is carried on a satellite. The satellite base station may be a macro base station, a micro base station, a picocell base station, a small cell, a relay station, or the like. The network device may alternatively be a balloon station, an unmanned aerial vehicle station, or the like. In a scenario in which the communication system includes a plurality of network devices, the plurality of network devices may support networks of a same technology, or may support networks of different technologies. The network device may include one or more co-site or non-co-site TRPs. For example, the network device is a satellite base station. The plurality of network devices may be satellite base stations of a same type, or may be satellite base stations of different types. The network device may communicate with the terminal device, or may communicate with the terminal device by using a relay station. In a scenario in which the plurality of network devices support networks of different technologies, the terminal device may communicate with the plurality of network devices. For example, the terminal device may communicate with a mounted network device that supports an LTE network, or the terminal device may communicate with a mounted network device that supports a 5G network, or the terminal device may implement dual connectivity of communicating with both a mounted network device that supports an LTE network and a mounted network device that supports a 5G network.

A core network has functions of completing registration, connection, and session management. The core network may include a network exposure function (network exposure function, NEF) module, a policy and charging function (policy control function, PCF) module, a session management function (session management function, SMF) module, a user plane function (user plane function, UPF) module, and the like. The NEF may be configured to expose a service and a capability of a 3GPP network function to an application function (application function, AF), and may also enable the AF to provide information for the 3GPP network function. The PCF may be configured to perform policy management on a charging policy and a quality of service (quality of service, QoS) policy. The SMF may be configured to complete session management functions such as internet protocol (internet protocol, IP) address allocation, UPF selection, and charging and QoS policy control for the terminal device. The UPF may be configured to perform specific data forwarding on a user plane and generate a call detail record based on a traffic status, and further has a function of a data plane anchor.

The terminal device is a device having a wireless transceiver function. The terminal device may also be referred to as user equipment (user equipment, UE), a terminal, an access terminal device, a vehicle-mounted terminal, an industrial control terminal, a subscriber unit, a subscriber station, a mobile console, a mobile station (mobile station, MS), a remote station, a remote terminal device, a mobile terminal (mobile terminal, MT), a mobile device, a wireless communication device, a user terminal, a user agent, a user apparatus, or the like. The terminal device may be deployed on land, and includes an indoor or outdoor device, a handheld device, a wearable device, or a vehicle-mounted device; or may be deployed on water (for example, on a ship); or may be deployed in the air (for example, on an aircraft or a balloon). The terminal device may be a mobile phone (mobile phone), a tablet computer (Pad), a computer having a wireless transceiver function, a virtual reality (VR) terminal device, an augmented reality (AR) terminal device, a wireless terminal in industrial control (industrial control), a vehicle-mounted terminal device, a wireless terminal in self-driving (self-driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a wearable terminal device, or the like.

For ease of understanding of embodiments disclosed in this application, the following two points are described.

(1) In embodiments disclosed in this application, an NR network scenario in a wireless communication network is used as an example for description. It should be noted that the solutions in embodiments disclosed in this application may be further applied to another wireless communication network, and a corresponding name may also be replaced with a name of a corresponding function in the another wireless communication network.

(2) Aspects, embodiments, or features of this application are presented in embodiments disclosed in this application by describing a system that includes a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may alternatively be used.

Then, related concepts in embodiments of this application are briefly described.

1. NTN

The NTN is a network that uses a radio frequency resource on a platform such as a satellite platform, an unmanned aerial vehicle (unmanned aerial vehicle, UAV) platform, or a high altitude communication platform (high altitude platform station, HAPS) to perform a communication service. A satellite may be deployed in a low-earth orbit (low-earth orbit, LEO), a medium-earth orbit (middle-earth orbit, MEO), or a geostationary earth orbit (geostationary earth orbit, GEO). In addition, the NTN may be applied to global coverage (for example, signal coverage of a remote region or a ship in the ocean), emergency disaster relief (for example, disaster monitoring or emergency communication), the internet of everything, high-speed movement (for example, a high-speed railway or an airplane), or another scenario.

Compared with a terrestrial network (for example, an NR network), the NTN has wider coverage, a higher path loss, a longer delay, a faster speed, lower costs, and other features. Specifically, the NTN may be used as a supplement and an extension of the terrestrial network. The NTN may implement seamless coverage of a wide area that cannot be implemented by either a wired telephone network or a terrestrial mobile communication network, and effectively resolve an internet access problem in a region with a lack of communication infrastructure (for example, a remote region or a ship in the ocean). For example, a large quantity of satellites may be deployed in the low-earth orbit, and seamless coverage of a ground range can be implemented through proper constellation construction. In addition, a round-trip transmission delay of data transmission between a satellite in the low-earth orbit and a terminal device on the ground may reach tens of milliseconds, which is far lower than a round-trip transmission delay of data transmission between a satellite in a synchronous orbit and the terminal device on the ground. For another example, with reference to FIG. 4, a satellite with an orbital height of 600 kilometers (kilometer, km) is used as an example. Assuming that a terminal device whose ground elevation angle relative to a satellite is greater than 30° on the ground can access the satellite, a coverage radius of the satellite on the ground is 850 km, and an area of ground coverage of the satellite, for example, a circular range having the coverage radius, is 2.27 million square kilometers. In addition, the NTN may further combine a high frequency band, a multi-point beam, frequency multiplexing, and other technologies, to meet a requirement of a high information rate service, and further reduce unit broadband costs.

2. Beam of a network device in the NTN

The beam of the network device in the NTN is used for signal or data transmission between the network device and the terminal device. Because the network device (for example, a satellite) in the NTN is far away from the ground, a high path loss exists in signal/data transmission between the network device and the terminal device on the ground. To reduce the high path loss, a super-large-scale antenna array may be disposed on the network device, and a sufficiently high transmit and receive array gain is provided by increasing a quantity of antennas. As the quantity of antennas increases, a main lobe width of a high-gain beam becomes narrower, that is, beam directivity is more centralized. If coverage of the network device in the NTN is divided into several beams with an equal area to perform seamless coverage, a more centralized beam directivity indicates a larger quantity of beams required for seamless coverage.

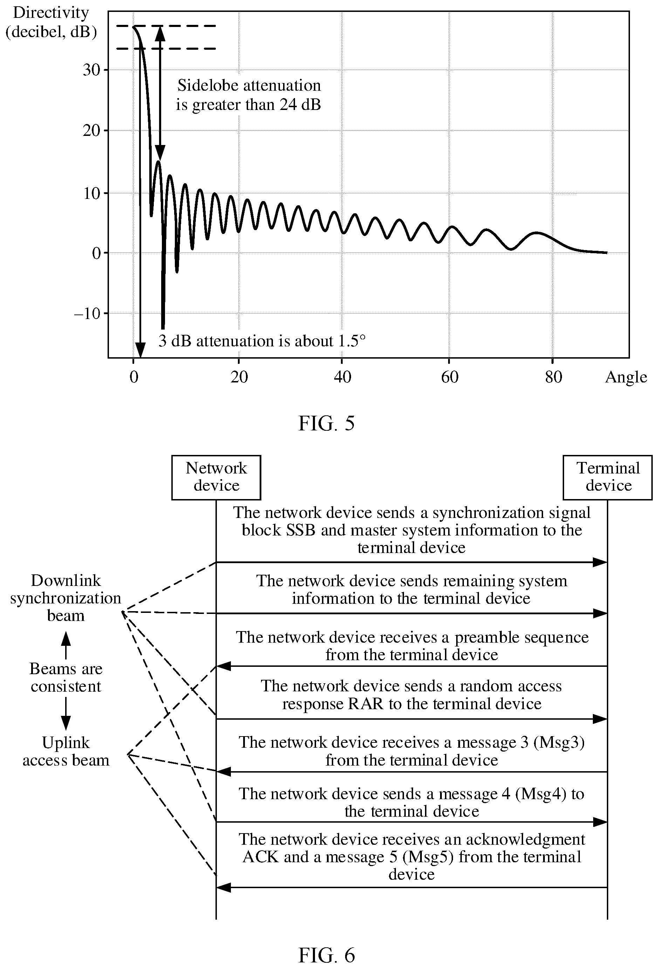

For example, a matrix array with 40×40=1600 antenna elements is disposed on the satellite, and the antenna array may provide an array gain of more than 30 (decibel, dB). With reference to FIG. 5, a 3 dB beamwidth of a beam of this antenna array in a sub satellite point direction is about 1.5°, a corresponding coverage radius on the ground is 13 km, and a coverage area is 530 square kilometers. If a coverage area of the satellite on the ground is to reach 2.27 million square kilometers, $\frac{2.27 \text{ million square kilometers}}{530 \text{ square kilometers}} \approx 4300$ beams are required to implement seamless coverage of 2.27 million square kilometers on the ground.

3. Initial access of the terminal device

A procedure in which the terminal device initially accesses the network device may be shown in FIG. 6. Specifically, with reference to FIG. 6, a network device may send a synchronization signal block (synchronization signal block, SSB) to a terminal device in a coverage cell, to help the terminal device perform time-frequency synchronization. The network device may further send primary system information and remaining system information to the terminal device by using a plurality of beams separately, so that the terminal device can obtain cell system information. After receiving the SSB, the terminal device may send an access request, that is, a preamble (Preamble) sequence, to the network device. After receiving the preamble sequence, the network device may send a random access response (random access response, RAR) to the terminal device, and receive a message 3 (Msg3) from the terminal device. Then, the network device may send a message 4 (Msg4) to the terminal device, and receive information such as an acknowledgment (acknowledgment, ACK) message or a message 5 (Msg5) from the terminal device. During initial access above, a plurality of beams (which may also be referred to as downlink synchronization beams) with different central directions that are used by the network device to send the SSB, the primary system information, the remaining system information, the RAR response, or the Msg4 are consistent with a plurality of beams (which may also be referred to as uplink access beams) used to receive information such as the preamble sequence, the Msg3, the ACK, or the Msg5 from the terminal device.

Beam sweeping means that one or more beams are used sequentially for signal transmission in some slots, and a sweeping duration is a duration required for completing one time of signal transmission on all of the one or more beams. For example, during initial access of the terminal device, one sweeping duration may be a duration required by the network device to separately send an SSB by using a plurality of beams with different directions. A total delay of initial access of the terminal device is generally about two to three sweeping durations.

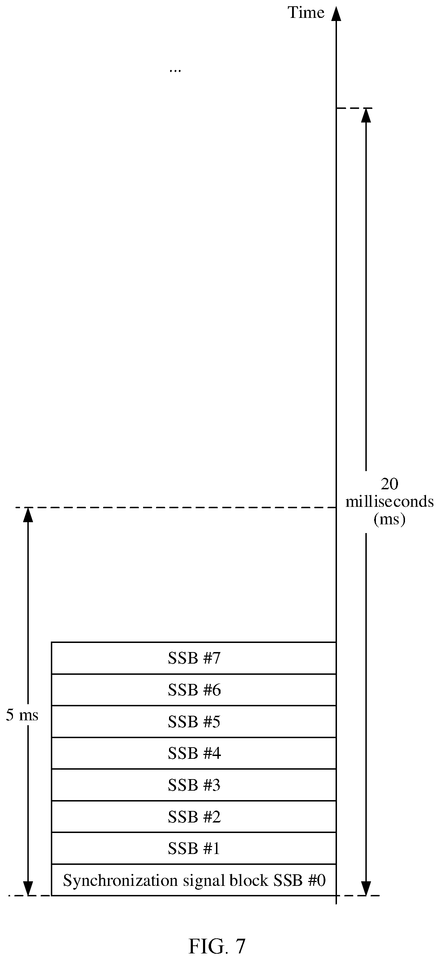

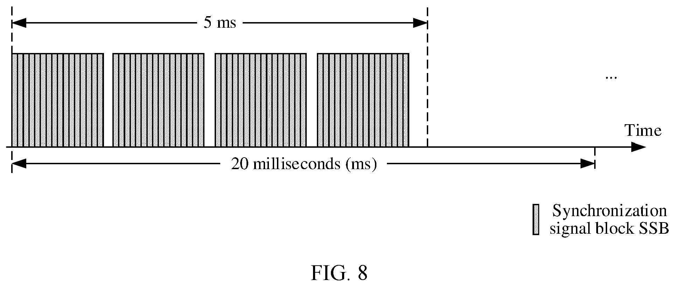

In addition, an SSB sending pattern in a case of different frequencies and different subcarrier spacings is agreed on in NR. For example, with reference to FIG. 7, when a frequency is 3 gigahertz (gigahertz, GHz) to 6 GHz and a subcarrier spacing is 30 kilohertz (kilohertz, kHz), the network device may send an SSB at a periodicity of 20 milliseconds (millisecond, ms), and may send 8 SSBs on different time domain resources by using a maximum of 8 beams in first 5 ms of each periodicity. With reference to FIG. 8, when a frequency is greater than 6 GHz and a subcarrier spacing is 120 kHz, the network device may send an SSB in a periodicity of 20 ms, and may send 64 SSBs on different time domain resources by using a maximum of 64 beams in first 5 ms of each periodicity.

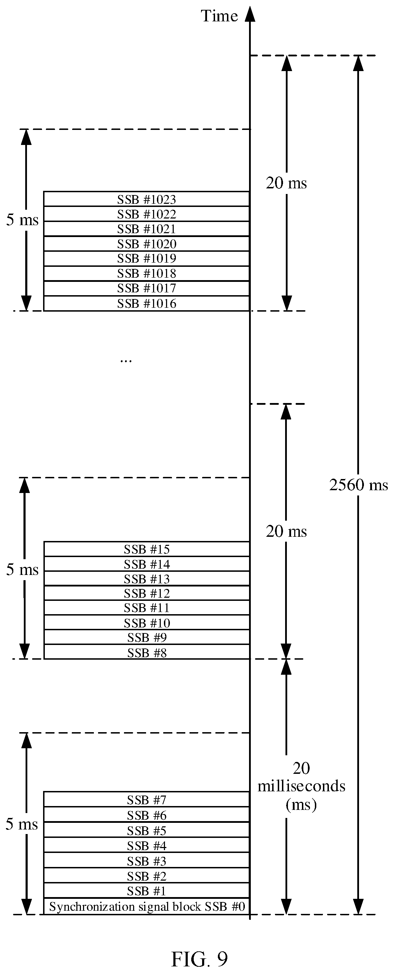

When the network device in the NTN performs seamless coverage by using a high-gain narrow beam, a large quantity of beams are required. If beam sweeping is performed in a manner agreed on in the NR, for example, an SSB is sent by using a plurality of beams based on an SSB sending pattern agreed on in the NR, a large quantity of beams causes a long beam sweeping duration, and further causes a long total delay of initial access of the terminal device. For example, in the NTN, the network device separately sends, by using 1024 beams, an SSB by using an SSB sending pattern in a case in which a frequency is 3 GHz to 6 GHz and a subcarrier spacing is 30 kHz in FIG. 7. With reference to FIG. 9, the network device may send 8 SSBs by using a maximum of 8 beams within 20 ms. In this case, 2.56s needs to be consumed for separately sending an SSB by using 1024 beams. In other words, a duration for performing beam sweeping by the network device on the 1024 beams is 2.56s. In this case, the total delay of initial access of the terminal device is 5.12s to 7.68s.

An embodiment of this application provides a signal transmission method 100. In the method, a network device determines M first beams from L first beams with different central directions, where L is an integer greater than 1, and M is an integer less than L and greater than 1; the network device separately broadens the M first beams to obtain M second beams, where the M second beams are in one-to-one correspondence with the M first beams; a maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated; and the network device separately performs signal transmission with a terminal device by using the M second beams.

It can be learned that, according to the method, ground coverage of each second beam whose gain is the first value in the M second beams is greater than ground coverage of the first beam whose gain is the first value and that corresponds to the second beam, so that total ground coverage of the M second beams whose gains are the first value is not less than total ground coverage of the L first beams whose gains are the first value, and a quantity of beams required for performing beam sweeping by the network device by using the second beam is less than a quantity of beams required for performing beam sweeping by using the first beam, that is, a quantity of beams required for performing beam sweeping by the network device is smaller. This can reduce a beam sweeping duration, and can further reduce an initial access delay when the method is applied to initial access of the terminal device.

An embodiment of this application provides a signal transmission method 200. In the method, a network device determines $R_2$ time domain resources; and the network device separately performs signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L. It can be learned that, when K is greater than 1, the network device may separately perform, through a plurality of radio frequency channels, signal transmission with the terminal device by using a plurality of first beams on a same time domain resource. The method can reduce time domain resources required by the network device to separately perform signal transmission by using the L first beams, that is, can reduce a duration for performing beam sweeping by the network device, and can further reduce an initial access delay when the method is applied to initial access of the terminal device.

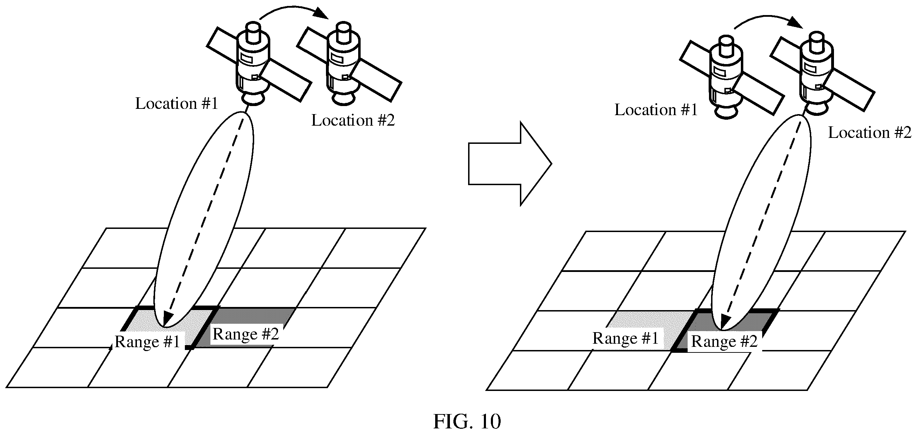

In addition, the network device (for example, the satellite) in the NTN may move at a high speed. Therefore, in the process in which the terminal device initially accesses the network device, as the network device moves, a same beam has different ground coverage at different moments. Consequently, after the terminal device receives a signal on one beam from the network device, a signal-to-noise ratio of another signal received by the terminal device from the beam may decrease significantly, causing an initial access failure of the terminal device. For example, with reference to FIG. 10, when a satellite is at a location #1, ground coverage of a beam is a range #1, and a terminal device in the range #1 receives a synchronization signal on the beam for synchronization with a network device. As the satellite moves from the location #1 to a location #2, ground coverage of the beam changes from the range #1 to a range #2. In this case, when the satellite is at the location #2, a signal-to-noise ratio of a system message of the beam that is received by the terminal device in the range #1 decreases. Consequently, the terminal device in the range #1 fails to receive the system message after synchronization, and the terminal device may fail in initial access.

An embodiment of this application provides a signal transmission method 300. In the method, for each of L first beams with different directions, a network device adjusts a central direction of the first beam at a second moment based on ground coverage of the first beam at a first moment and a moving distance of the network device from the first moment to the second moment, where the first moment and the second moment are moments in a first periodicity, and L is an integer greater than 1; the network device separately performs signal transmission at the second moment by using the L first beams with adjusted central directions; the network device separately performs, by using the L first beams, signal transmission with a terminal device at a moment that is in a second periodicity and that corresponds to the first moment; and the network device separately performs, by using the L first beams with the adjusted central directions, signal transmission at a moment that is in the second periodicity and that corresponds to the second moment. It can be learned that, after the network device moves, the central direction of each of the L first beams may be adjusted, to ensure that ground coverage of the first beam after the central direction is adjusted can include ground coverage of the first beam before the central direction is adjusted. This can maintain signal-to-noise ratios of signals received by terminal devices located in a same range from the network device before and after the network device moves, and can further reduce an initial access failure rate of the terminal device.

Signal transmission methods provided in embodiments of this application are described below with reference to the accompanying drawings.

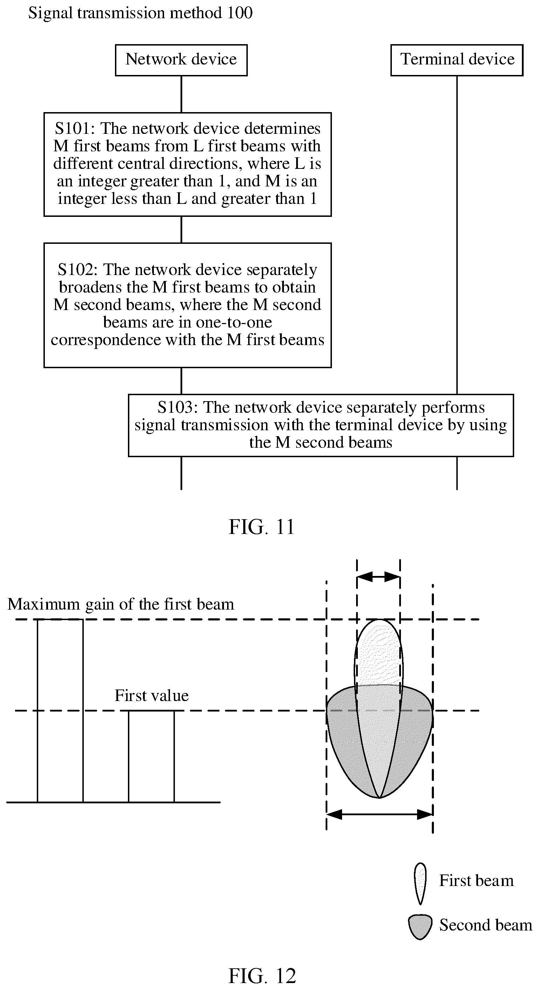

FIG. 11 is a schematic flowchart of a signal transmission method 100 according to an embodiment of this application. The signal transmission method 100 is described from a perspective of interaction between a network device and a terminal device. This embodiment may be performed by the terminal device and the network device, or may be performed by components (for example, processors, chips, or chip systems) of the terminal device and the network device. The following uses an example in which the network device and the terminal device are execution bodies for description. The signal transmission method 100 includes the following steps.

S101: The network device determines M first beams from L first beams with different central directions, where L is an integer greater than 1, and M is an integer less than L and greater than 1.

In an optional implementation, that the network device determines M first beams from L first beams with different central directions may include: The network device divides total ground coverage of the L first beams into M regions that do not overlap each other. The determined M first beams are in one-to-one correspondence with the M regions, and a central direction of each of the M first beams points to a reference point of a region corresponding to the first beam in the M regions. For example, the reference point of each of the M regions may be a central point of the region, or may be a location close to the central point in the region.

Optionally, a value of M may be determined based on an acceptable beam sweeping duration, and a duration for performing beam sweeping by the network device on M beams is less than or equal to an acceptable maximum beam sweeping duration. For example, if a duration required for performing beam sweeping on one beam is ti, and the acceptable maximum beam sweeping duration is $t_2$, $M \times t_1$ needs to be less than or equal to $t_2$ when the value of M is determined.

S102: The network device separately broadens the M first beams to obtain M second beams, where the M second beams are in one-to-one correspondence with the M first beams.

A maximum gain of each of the M second beams is less than a maximum gain of a first beam corresponding to the second beam, and the maximum gain of each of the M second beams is greater than or equal to a first value. A width of each second beam whose gain is the first value in the M second beams is greater than a width of a first beam whose gain is the first value and that corresponds to the second beam, as shown in FIG. 12. In addition, the first value is a largest value in second values respectively corresponding to a plurality of channels between the network device and the terminal device, and the second value corresponding to each of the plurality of channels is a minimum gain when a signal on the channel can be correctly demodulated.

In an initial access phase of the terminal device, a synchronization signal and an access signal are mainly detected based on energy, and a signal-to-noise ratio required for correctly demodulating the synchronization signal and the access signal is generally less than a signal-to-noise ratio required for correctly demodulating data during data transmission. Therefore, a gain level provided by the first beam may be far higher than a threshold required for correctly demodulating the synchronization signal/access signal. Therefore, the network device separately broadens the M first beams, to ensure that a signal can be correctly demodulated when signal transmission is performed by using a beam obtained through broadening, and increase a width of the beam whose gain is the first value to expand ground coverage of the beam whose gain is the first value, so that total ground coverage of the M second beams is not less than the total ground coverage of the L first beams when M is less than L. A duration for separately performing signal transmission by the network device by using the M second beams is less than a duration for separately performing signal transmission by the network device by using the L first beams, that is, a duration for performing beam sweeping by the network device is reduced, and an initial access delay can be further reduced when the method is applied to initial access of the terminal device. In addition, the maximum gain of each of the M second beams is greater than or equal to the first value, so that a signal can be correctly demodulated when the M second beams are used to perform signal transmission on any one of the plurality of channels between the network device and the terminal device.

In addition, a difference between the maximum gain of the first beam and the second value may also be referred to as a demodulation margin, and each of the M first beams corresponds to one demodulation margin for each of the plurality of channels. Because maximum gains of different first beams may be different and second values corresponding to different channels may be different, demodulation margins of a same first beam for different channels may be different, and demodulation margins of different first beams for a same channel may be different. In this case, a difference between the maximum gain of each of the M second beams obtained through broadening and the maximum gain of the first beam corresponding to the second beam is less than or equal to a third value, and the third value is a smallest value in demodulation margins respectively corresponding to the M first beams. For example, M is equal to 4, and the channels between the network device and the terminal device include a channel #1 and a channel #2; and demodulation margins of the first beam #1 to the first beam #4 for the channel #1 are sequentially a demodulation margin #1 to a demodulation margin #4, and demodulation margins of the first beam #1 to the first beam #4 for the channel #2 are sequentially a demodulation margin #5 to a demodulation margin #8. In this case, a difference between a maximum gain of each of the first beam #1 to the first beam #4 and a maximum gain of a second beam corresponding to the first beam is less than or equal to a smallest value in the demodulation margin #1 to the demodulation margin #8.

In an optional implementation, the network device may separately broaden the M first beams by using a square law phase distribution method, an antenna selective sending manner, or a sum and difference beam manner. The three broadening manners may be specifically described in Implementation 1 to Implementation 3 below:

Implementation 1: The network device broadens the M first beams by using the square law phase distribution method. Specifically, for each of the M first beams, the network device may change gain directivity distribution of the first beam by adding an offset phase to the first beam, to broaden the first beam. For example, a steering vector $q_l$ of an $l^{th}$ first beam in the M first beams may be shown in Formula (1) below:

$$q_l = \frac{1}{\sqrt{S}}[1, e^{j\frac{2\pi l}{S}}, \dots e^{j\frac{2\pi l(S-1)}{S}}]^T \qquad (1)$$

Herein, S represents a total quantity of linear array antennas.

The network device may add an offset phase based on $q_l$ shown in Formula (1). A steering vector $f_l$ of a second beam corresponding to the $l^{th}$ first beam may be shown in Formula (2) below:

$$f_l = \begin{bmatrix} e^{jg(1)} & \dots & 0 \\ \vdots & \ddots & \vdots \\ 0 & \dots & e^{jg(S)} \end{bmatrix} \cdot q_l \qquad (2)$$

Herein, $g(s)$ ($s$=1, 2, ..., $S$) may be shown in Formula (3) below:

$$g(s) = \left| 4\pi c \left( \frac{s-(S+1)/2}{S-1} \right)^p \right| \qquad (3)$$

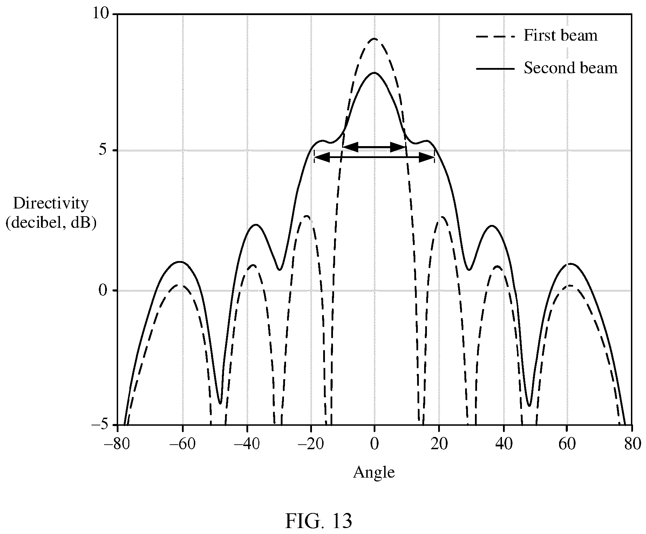

Herein, $p$ and $c$ are respectively two parameters for controlling a phase. The network device may broaden the first beam by adjusting $p$ and $c$. For example, $S$=8, $p$=2, and $c$=0.6. A gain directivity pattern of a first beam and a second beam corresponding to the first beam may be shown in FIG. 13. It can be learned from FIG. 13 that a maximum gain of the second beam is 1.1 dB less than a maximum gain of the first beam corresponding to the second beam. If a gain of 5 dB is used as a gain requirement for correctly demodulating a signal, that is, the first value is 5 dB, a width of the second beam whose gain is the first value is greater than a width of the first beam whose gain is the first value and that corresponds to the second beam. In this way, when the gain is the first value, ground coverage of the second beam is greater than ground coverage of the first beam corresponding to the second beam. Therefore, the network device separately broadens the M first beams, so that the total ground coverage of the obtained M second beams is not less than the total ground coverage of the L first beams, and M is less than L. In other words, a quantity of beams on which the network device performs beam sweeping by using the second beam is less than a quantity of beams on which the network device performs beam sweeping by using the first beam, so that a duration for performing beam sweeping by the network device can be reduced.

Implementation 2: The network device broadens the M first beams by using the antenna selective sending manner. Specifically, the network device may reduce directional resolution of the first beam by reducing a quantity of transmit antennas, but may increase a main lobe width of the first beam. In addition, all energy is concentrated on a transmit antenna, to ensure that a loss of the maximum gain of the first beam is as small as possible. For example, a steering vector $q_l$ of an $l^{th}$ first beam in the M first beams may be shown in Formula (1) above, and a steering vector $f_l$ of a second beam corresponding to the $l^{th}$ first beam may be shown in Formula (4) below:

$$f_l = \frac{1}{\sqrt{\tilde{S}}}[1, e^{j\frac{2\pi l}{S}}, \dots e^{j\frac{2\pi l(\tilde{S}-1)}{S}}, 0, \dots, 0]^T \qquad (4)$$

Herein, $\tilde{S}$ is a quantity of selected transmit antennas, S represents a total quantity of linear array antennas, and $\tilde{S} < S$.

Implementation 3: The network device broadens the M first beams by using the sum and difference beam manner. Specifically, the second beam corresponding to each of the M first beams is obtained by performing linear combination on the first beam and another beam whose central direction is different from that of the first beam. The another beam whose central direction is different from that of the first beam may be another first beam whose ground coverage is adjacent to that of the first beam in the L first beams. For each of the M first beams. The network device may add or subtract an appropriate phase, so that the first beam and the another beam implement gain complementarity between main lobes of the beams, and a main lobe width of a composite beam (that is, the second beam corresponding to the first beam) of the first beam and the another beam is greater than a main lobe width of the first beam. For example, a steering vector $q_l$ of an lth first beam in the M first beams may be shown in Formula (1) above, and a steering vector $f_l$ of a second beam corresponding to the lth first beam may be shown below:

$$f_l = a_1 q_{l1} + a_2 q_{l2}, \ |a_1| + |a_2| = 1 \tag{5}$$

Herein, $q_{l1}$ is $q_l$, and $q_{l2}$ is a steering vector of a first beam whose central direction is different from that of the $l^{th}$ first beam in the L first beams.

In addition, in step 101 and step 102 above, the M second beams are obtained by the network device by broadening the determined M first beams after the network device determines the M first beams. In addition to this implementation of determining the M second beams, there is another optional implementation: The network device separately broadens the L first beams to obtain L second beams; and the network device determines the M second beams from the L second beams. The determined M second beams meet the following: While the value of M is as small as possible, the total ground coverage of the M second beams includes the coverage of the L first beams. The operation of separately broadening the L first beams to obtain the L second beams is similar to the operation of separately broadening the M first beams to obtain the M second beams, and details are not described again.

Optionally, before the network device separately broadens the L first beams, the method may further include: The network device adjusts beam power of a near-point beam in the L first beams to beam power of a far-point beam in the L first beams. The far-point beam and the near-point beam are relative. The far-point beam is a beam whose ground coverage is farther from the network device, and the near-point beam is a beam whose ground coverage is closer to the network device.

Generally, in the L first beams, a demodulation margin of the far-point beam is less than a demodulation margin of the near-point beam. Therefore, in this implementation, the demodulation margin of the far-point beam in the L first beams can be improved, to help increase a smallest value (that is, the foregoing third value) in demodulation margins respectively corresponding to the L first beams, thereby increasing a range in which a maximum gain of a first beam can be decreased during broadening, so that a maximum gain of a second beam corresponding to the first beam can be adjusted to be smaller. This can increase a width of the second beam whose gain is the first value, and can further increase ground coverage of the second beam, thereby making a quantity of required second beams whose ground coverage is not less than the total ground coverage of the L first beams smaller. In other words, a quantity of second beams determined by the network device from the L second beams may be smaller, that is, the value of M is reduced, so that a quantity of beams on which the network device performs beam sweeping is reduced, and a duration for performing beam sweeping by the network device is further reduced.

S103: The network device separately performs signal transmission with the terminal device by using the M second beams. Specifically, the network device separately sends a signal to the terminal device by using the M second beams, or the network device separately receives a signal from the terminal device by using the M second beams. For example, the signal separately sent by the network device to the terminal device by using the M second beams may include one or more of the following: an SSB, primary system information, remaining system information, a RAR response, and an Msg4. For another example, the signal separately received by the network device from the terminal device by using the M second beams may include one or more of the following: a preamble sequence, an Msg3, an ACK message, and an Msg5.

In an optional implementation, that the network device separately performs signal transmission with the terminal device by using the M second beams may include: The network device separately performs signal transmission with the terminal device by using the M second beams on $R_1$ different time domain resources, where $R_1$ is a positive integer less than M. N second beams in the M second beams are used on each of the $R_1$ time domain resources, and different second beams are used on different time domain resources in the $R_1$ time domain resources. The N second beams on each time domain resource are used to perform signal transmission through N radio frequency channels, where N is a positive integer less than or equal to M. Compared with an implementation of performing signal transmission by using M second beams on M different time domain resources, this implementation of performing signal transmission by using M second beams through a plurality of radio frequency channels can reduce time domain resources occupied for performing signal transmission by using the M second beams, and can further reduce a duration for performing beam sweeping by the network device.

Optionally, $R_1$ may be determined based on the value of M and a quantity Q of radio frequency channels that can be used for signal transmission between the network device and the terminal device. Specifically, $R_1$ may be equal to a value obtained by rounding up $\dfrac{M}{Q}$, Q is an integer greater than 1, and Q is greater than or equal to N.

In addition, for different time domain resources in the $R_1$ time domain resources, N may have a same value, that is, quantities of second beams used on different time domain resources may be the same. For example, M is equal to 12, the 12 second beams are sequentially a second beam #1 to a second beam #12, and Q is equal to 4. In this case, $R_1$ may be

equal to 12/4, that is, $R_1$ may be equal to 3; the network device may separately perform signal transmission with the terminal device by using the 12 second beams on the three time domain resources; and a quantity of second beams used on each time domain resource is 4. In the three time domain resources, the second beam #1 to the second beam #4 on the time domain resource #1 may be used to separately perform signal transmission with the terminal device, the second beam #5 to the second beam #8 on the time domain resource #2 may be used to separately perform signal transmission with the terminal device, and the second beam #9 to the second beam #12 on the time domain resource #3 may be used to separately perform signal transmission with the terminal device. The four second beams used on each of the three time domain resources are in one-to-one correspondence with the four radio frequency channels. The network device performs signal transmission by using any second beam through a radio frequency channel corresponding to the second beam.

Alternatively, for different time domain resources in the $R_1$ time domain resources, N may have different values, that is, quantities of second beams used on different time domain resources may be different. For example, M is equal to 10, the 10 second beams are sequentially a second beam #1 to a second beam #10, and Q is equal to 4. In this case, $R_1$ may be equal to a value obtained by rounding up 10/4, that is, $R_1$ may be equal to 3; the network device may separately perform signal transmission with the terminal device by using the 10 second beams on the three time domain resources; and in the three time domain resources, a quantity of second beams used on the time domain resource #1 and a quantity of second beams used on the time domain resource #2 are both 4, and a quantity of second beams used on the time domain resource #3 is 2. In the three time domain resources, the second beam #1 to the second beam #4 on the time domain resource #1 may be used to separately perform signal transmission with the terminal device, the second beam #5 to the second beam #8 on the time domain resource #2 may be used to separately perform signal transmission with the terminal device, and the second beam #9 and the second beam #10 on the time domain resource #3 may be used to separately perform signal transmission with the terminal device. The four second beams used on the time domain resource #1 are in one-to-one correspondence with the four radio frequency channels. The four second beams used on the time domain resource #2 are in one-to-one correspondence with the four radio frequency channels. The two second beams used on the time domain resource #3 are in one-to-one correspondence with two of the four radio frequency channels. The network device performs signal transmission by using any second beam through a radio frequency channel corresponding to the second beam.

Optionally, an antenna array disposed on the network device may be a hybrid beamforming (hybrid beamforming, HBF) structure, a digital beamforming (digital beamforming, DBF) structure, or an analog beamforming (analog beamforming, ABF) structure with a plurality of radio frequency channels. The antenna arrays of these architectures may enable the network device to perform signal transmission with the terminal device through a plurality of radio frequency channels on a same time domain resource. The network device may alternatively use another antenna array that can enable the network device to perform signal transmission with the terminal device through a plurality of radio frequency channels on a same time domain resource. This is not limited.

Optionally, the signal includes an SSB; SSB indexes of SSBs sent by using the N second beams on each of the plurality of time domain resources are the same; and a quantity of SSB indexes of SSBs sent by using the M second beams on the $R_1$ time domain resources is equal to $R_1$. In other words, SSB indexes of SSBs sent on a same time domain resource are the same. Compared with a manner in which the network device occupies different time domain resources to separately send an SSB by using a plurality of beams and SSB indexes of the SSBs sent on the different time domain resources are different, because fewer time domain resources are occupied to separately perform signal transmission by using the M second beams, this implementation makes a total quantity of SSB indexes required by the network device to separately send an SSB by using the M second beams smaller, and can further reduce a quantity of bits occupied by an SSB index in information that is sent by the network device to the terminal device and that carries the SSB index.

Optionally, the N second beams used on each time domain resource include $N_1$ second beams whose ground coverage is adjacent to each other in the M second beams, where $N_1$ is a positive integer less than or equal to N. Because there may be an overlapping region at beam edges of two second beams whose ground coverage is adjacent to each other, a gain of the network device in the overlapping region is obtained by superposing gains of the two second beams respectively in the overlapping region. This implementation can increase the gain of the network device in the overlapping region, and can further increase a signal-to-noise ratio of a signal received by a terminal device in the overlapping region from the network device and a signal-to-noise ratio of a signal received by the network device from the terminal device in the overlapping region, thereby increasing a success rate of correctly demodulating a signal.

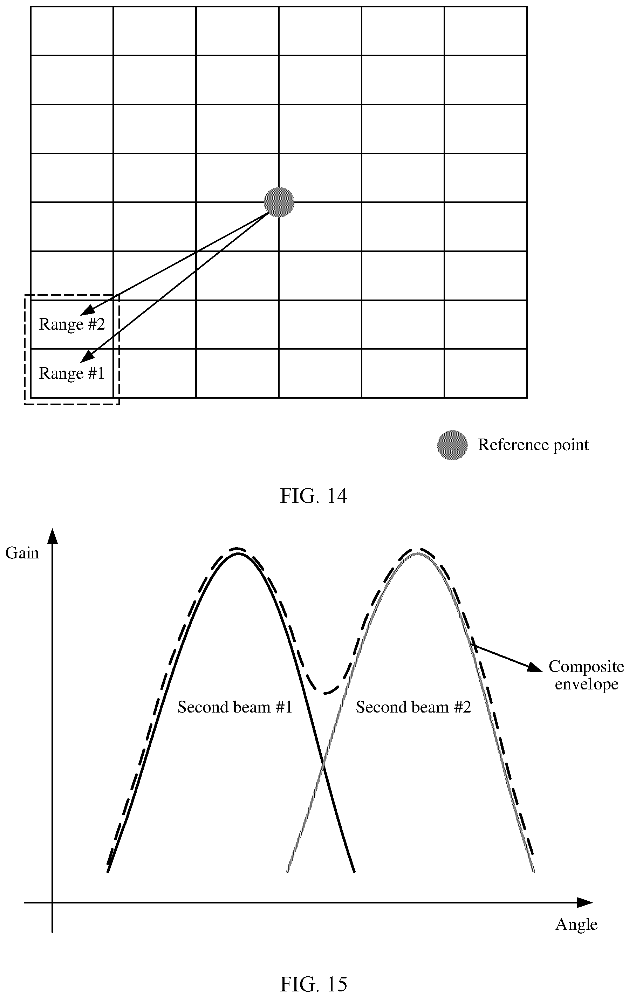

For example, with reference to FIG. 14, a gray circle in FIG. 14 represents a sub satellite point of the network device, and N second beams used on a time domain resource include a second beam #1 whose ground coverage is a range #1 and a second beam #2 whose ground coverage is a range #2. It can be learned that the second beam #1 and the second beam #2 are two second beams whose ground coverage is adjacent to each other. With reference to FIG. 15, a black solid line in FIG. 15 represents a partial gain status of the second beam #1, a gray solid line represents a partial gain status of the second beam #1, and a black dashed line represents a composite envelope of a gain of the second beam #1 and a gain of the second beam #2. It can be learned that in an overlapping region of the second beam #1 and the second beam #2, a gain represented by the composite envelope is higher than both the gain of the second beam #1 and the gain of the second beam #2.

Optionally, the N second beams used on each time domain resource include $N_2$ second beams and $N_3$ second beams in the M second beams; a sum of $N_2$ and $N_3$ is less than or equal to N, and both $N_2$ and $N_3$ are positive integers less than N; ground coverage of the $N_2$ second beams is not adjacent to ground coverage of the $N_3$ second beams; and a distance between ground coverage of each of the $N_2$ second beams and a reference point of ground coverage of the M second beams is less than a distance between ground coverage of each of the $N_3$ second beams and the reference point. The $N_2$ second beams may be $N_2$ second beams whose ground coverage is all adjacent, partially adjacent, and all non-adjacent in the M second beams, and the $N_3$ second beams may be $N_3$ second beams whose ground coverage is all adjacent, partially adjacent, and all non-adjacent in the M second beams.

Optionally, the reference point may be a location with a shortest distance from the network device in the total ground coverage of the M second beams. It can be learned that a path loss of signal transmission between the network device and a terminal device located in the ground coverage of the $N_2$ second beams is less than a path loss of signal transmission between the network device and a terminal device located in the ground coverage of the $N_3$ second beams. In this case, a difference between a maximum gain of a second beam in the $N_2$ second beams and the first value may be greater than a difference between a maximum gain of a second beam in the $N_3$ second beams and the first value.

In this case, the network device may adjust beam power of the $N_2$ second beams to beam power of the $N_3$ second beams to perform signal transmission, to balance a signal-to-noise ratio of a signal received by the terminal device located in the ground coverage of the $N_2$ second beams and a signal-to-noise ratio of a signal received by the terminal device located in the ground coverage of the $N_3$ second beams. Therefore, while the terminal device located in the ground coverage of the $N_3$ second beams can correctly demodulate a signal, the signal-to-noise ratio of the signal received by the terminal device located in the ground coverage of the $N_3$ second beams from the network device can be increased, thereby increasing a success rate of correctly demodulating the signal by the terminal device located in the ground coverage of the $N_3$ second beams. In addition, in this implementation, while the network device can correctly demodulate the signal received from the terminal device located in the ground coverage of the $N_3$ second beams, the signal-to-noise ratio of the signal received from the terminal device located in the ground coverage of the $N_3$ second beams can be increased, thereby increasing a success rate of correctly demodulating, by the network device, the signal received from the terminal device located in the ground coverage of the $N_3$ second beams.

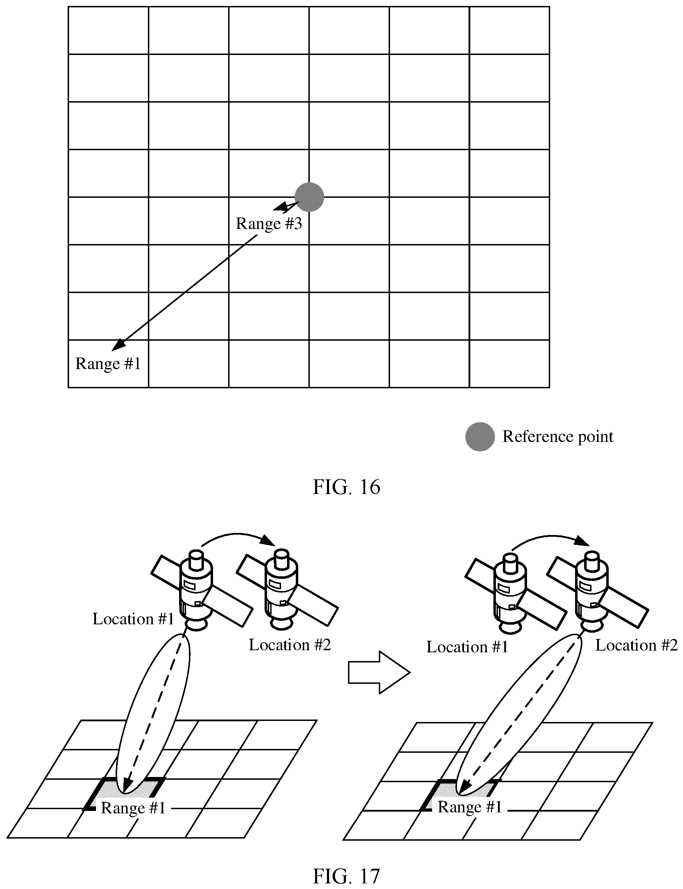

For example, the reference point of the ground coverage of the M second beams is a sub satellite point of the network device. With reference to FIG. 16, a gray circle in FIG. 16 represents the sub satellite point of the network device, and the N second beams used on each time domain resource include a second beam #3 whose ground coverage is a range #3 and a second beam #1 whose ground coverage is a range #1. It can be learned that the ground coverage of the second beam #3 is not adjacent to the ground coverage of the second beam #1, and a distance between the ground coverage of the second beam #3 and the sub satellite point is less than a distance between the ground coverage of the second beam #1 and the sub satellite point. In this case, the network device may adjust beam power of the second beam #3 to beam power of the second beam #1.

Optionally, the N second beams used on each time domain resource may include not only $N_1$ second beams, but also the foregoing $N_2$ second beams and $N_3$ second beams. For specific descriptions of the $N_1$ second beams, the $N_2$ second beams, and the $N_3$ second beams, refer to the foregoing related descriptions. Details are not described again.

In an optional implementation, a location of the network device at a first moment is different from a location of the network device at a second moment. The method further includes: For each of the M second beams, the network device adjusts a central direction of the second beam at the second moment based on ground coverage of the second beam at the first moment and a moving distance of the network device from the first moment to the second moment. The network device determines M third beams from the L first beams based on an adjusted central direction of each of the M second beams at the second moment, and separately broadens the M third beams to obtain M fourth beams. The network device separately performs signal transmission with the terminal device at the second moment by using the M fourth beams.

The M fourth beams may be in one-to-one correspondence with the M third beams, and the M third beams may be in one-to-one correspondence with the M second beams. In this implementation, ground coverage of each of the M second beams at the second moment includes the ground coverage of the second beam at the first moment. Therefore, when a central direction of each of the M third beams is the same as an adjusted central direction of a second beam corresponding to the third beam, it can be ensured that ground coverage of each of the M fourth beams can include ground coverage of a second beam with an adjusted central direction corresponding to the fourth beam, so that terminal devices located in a same range can still correctly demodulate a signal from the network device after the network device moves, and the network device can still correctly demodulate, before and after the movement, a signal from the terminal devices located in a same range. For example, with reference to FIG. 17, the location of the network device at the first moment is a location #1, the location of the network device at the second moment is a location #2, and the ground coverage of the second beam with the adjusted central direction at the second moment includes the ground coverage (that is, the range #1) of the second beam at the first moment.

Optionally, there may be an interval of a period of time between the first moment and the second moment. In other words, a moving time of the network device may be discretized, and a central direction of a beam is adjusted after the network device moves for a period of time. In this way, the network device may not adjust the central direction of the beam in real time and perform beam broadening again, so that calculation overheads of the network device can be reduced. In addition, in addition to a manner in which the network device adjusts a central direction of a beam based on ground coverage of the beam and a moving distance of the network device, a beam used by the network device at each moment may be designed offline and stored in the network device in advance. This helps reduce real-time calculation overheads of the network device.

Optionally, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

Because ground coverage of the beam used by the network device to perform signal transmission at the second moment in the first periodicity includes ground coverage of the beam used by the network device to perform signal transmission at the first moment, in this manner, ground coverage of the beam used by the network device to perform signal transmission at the moment that is in the second periodicity and that corresponds to the second moment may include ground coverage of the beam used for signal transmission at the moment corresponding to the first moment. Therefore, before and after the network device moves in the second periodicity, terminal devices located in a same range can still correctly demodulate a signal from the network device, and the network device can correctly demodulate, before and after the movement, signals from the terminal devices located in a same range. In addition, the network device may not adjust a central direction of a beam in the second periodicity, but directly uses a beam used at a corresponding moment in the first periodicity. This helps reduce calculation overheads of the network device.

In addition, the first periodicity and the second periodicity may be periodicities in which the network device performs beam sweeping. When the first periodicity is a 1st periodicity in which the network device performs beam sweeping, in a periodicity other than the second periodicity, a beam used for signal transmission at a moment corresponding to the first moment may be the same as the beam used for signal transmission at the first moment, and a beam used for signal transmission at a moment corresponding to the second moment may be the same as the beam used for signal transmission at the second moment.

In conclusion, in the signal transmission method 100, the network device separately broadens the M first beams, so that ground coverage of each second beam whose gain is the first value in the M second beams is greater than ground coverage of the first beam whose gain is the first value and that corresponds to the second beam, and total ground coverage of the M second beams whose gains are the first value is not less than total ground coverage of the L first beams whose gains are the first value. Compared with a manner in which the network device separately performs signal transmission by using the L first beams, on the premise that ground coverage is not less than ground coverage of the L first beams, a manner in which the network device separately performs signal transmission with the terminal device by using the M second beams can reduce a quantity of beams used by the network device to perform signal transmission, that is, reduce a quantity of beams on which the network device performs beam sweeping, and further reduce a duration for performing beam sweeping by the network device, thereby reducing an initial access delay of the terminal device in a scenario in which the signal transmission method is applied to initial access of the terminal device.

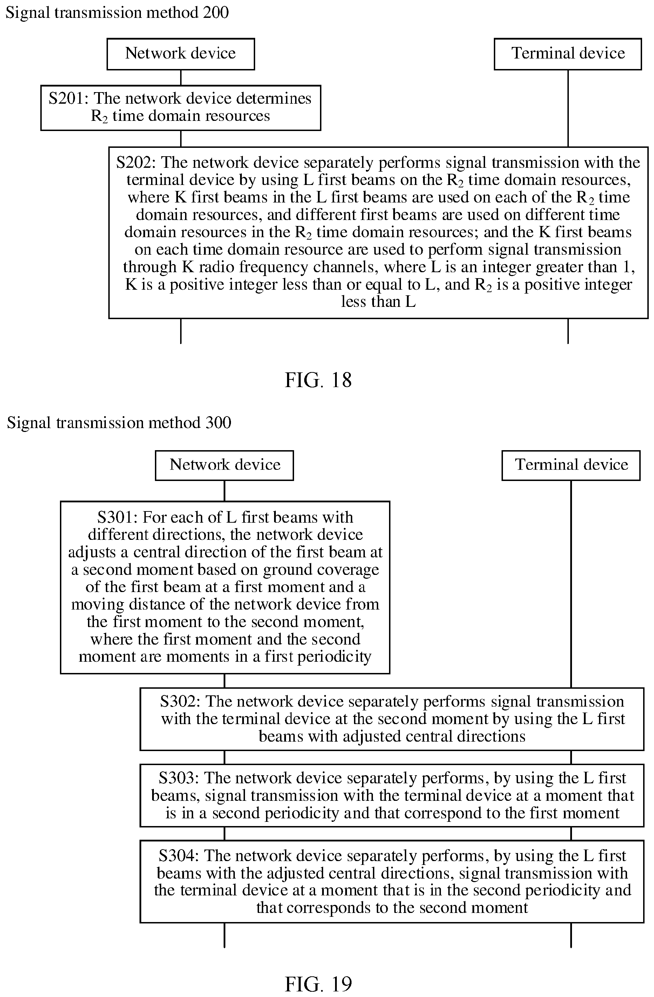

FIG. 18 is a schematic flowchart of a signal transmission method 200 according to an embodiment of this application. The signal transmission method 200 is described from a perspective of interaction between a network device and a terminal device. This embodiment may be performed by the terminal device and the network device, or may be performed by components (for example, processors, chips, or chip systems) of the terminal device and the network device. The following uses an example in which the network device and the terminal device are execution bodies for description. The signal transmission method 200 includes the following steps.

S201: The network device determines $R_2$ time domain resources.

In an optional implementation, $R_2$ may be determined based on a quantity L of first beams and a quantity Q of radio frequency channels that can be used to perform signal transmission between the network device and the terminal device. Specifically, $R_2$ may be equal to a value obtained by rounding up $\frac{L}{Q}$, and Q is an integer greater than 1.

In an optional implementation, the $R_2$ time domain resources may be determined based on an SSB sending pattern. This implementation may be applied to a case of separately performing signal transmission by the network device with the terminal device by using L first beams on the $R_2$ time domain resources in step S202 is sending a signal by the network device to the terminal device.

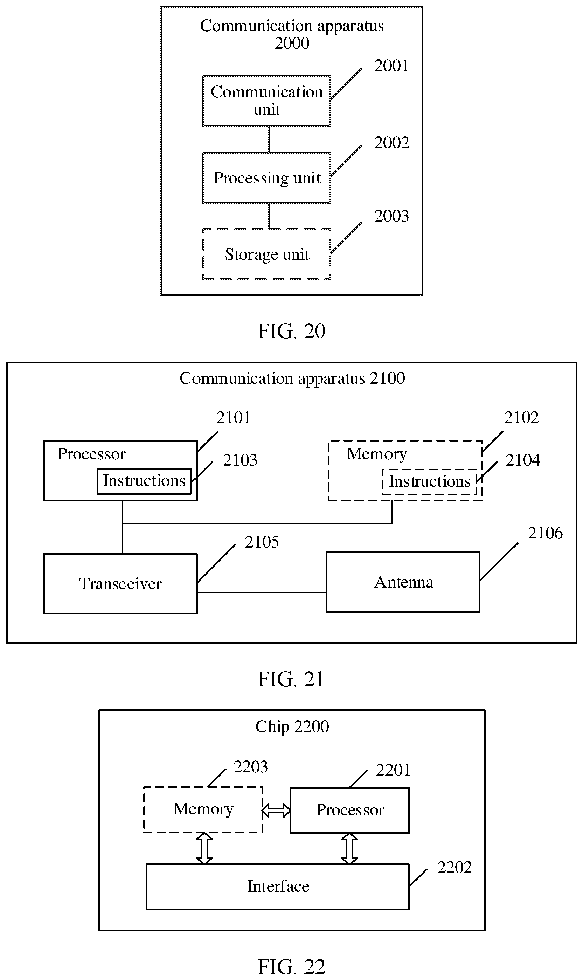

For example, when the signal sent by the network device to the terminal device is an SSB, the $R_2$ time domain resources may be $R_2$ time domain resources that can be used by the network device to send the SSB and that are shown in the SSB sending pattern. For example, an SSB sending pattern shown in FIG. 7 is used as an example. In the SSB sending pattern shown in FIG. 7, 20 milliseconds are used as a periodicity, and eight time domain resources in first 5 ms of one periodicity may be used by the network device to send the SSB to the terminal device. If $R_2$ is equal to 16, the $R_2$ time domain resources may include eight time domain resources in first 5 ms of a 1st periodicity and eight time domain resources in first 5 ms of a 2nd periodicity. For another example, an SSB sending pattern shown in FIG. 8 is used as an example. In the SSB sending pattern shown in FIG. 8, 20 milliseconds are used as a periodicity, and 64 time domain resources in first 5 ms of one periodicity may be used by the network device to send the SSB to the terminal device. If $R_2$ is equal to 16, the $R_2$ time domain resources may include 16 time domain resources in first 5 ms of a 1st periodicity.

For example, when the signal sent by the network device to the terminal device is primary system information, remaining system information, a RAR response, or an Msg4, the $R_2$ time domain resources may be $R_2$ time domain resources, shown in the SSB sending pattern, other than a time domain resource that can be used by the network device to send the SSB.

In another optional implementation, when separately performing signal transmission by the network device with the terminal device by using L first beams on the $R_2$ time domain resources in step S202 is receiving a signal by the network device from the terminal device, the $R_2$ time domain resources may be determined by the network device based on another signal corresponding to the received signal and a time domain resource used when the network device sends the signal to the terminal device. For example, the signal received by the network device may include one or more of the following: a preamble sequence, an Msg3, an ACK message, and an Msg5. The preamble sequence corresponds to an SSB, the Msg3 corresponds to a RAR, and the ACK and the Msg5 correspond to an Msg4. For example, if $R_2$ is equal to 8, eight time domain resources used by the network device to receive the preamble sequence from the terminal device may be obtained by using the eight time domain resources used by the network device to send the SSB to the terminal device as a start location through backward offset. The offset may be determined by the network device through calculation based on a network delay, a transmission distance, or the like.

S202: The network device separately performs signal transmission with the terminal device by using the L first beams on the $R_2$ time domain resources, where K first beams in the L first beams are used on each of the $R_2$ time domain resources, and different first beams are used on different time domain resources in the $R_2$ time domain resources; and the K first beams on each time domain resource are used to perform signal transmission through K radio frequency channels, where L is an integer greater than 1, K is a positive integer less than or equal to L, and $R_2$ is a positive integer less than L. In addition, when $R_2$ is determined based on L and Q, K is further less than or equal to Q.

For different time domain resources in the $R_2$ time domain resources, values of K may be the same, that is, quantities of first beams used on different time domain resources may be the same. Alternatively, for different time domain resources in the $R_2$ time domain resources, values of K may be different, that is, quantities of first beams used on different time domain resources may be different. For different time domain resources in the $R_1$ time domain resources in the signal transmission method 100, values of N may be the same or may be different. For specific descriptions, refer to the related descriptions in the signal transmission method 100. Details are not described again.

In addition, that the network device separately performs signal transmission with the terminal device by using the L first beams on the $R_2$ time domain resources in step S202 may be: The network device separately sends a signal to the terminal device by using the L first beams on the $R_2$ time domain resources, or the network device separately receives a signal from the terminal device by using the L first beams on the $R_2$ time domain resources. For example, the signal sent by the network device to the terminal device may include one or more of the following: an SSB, primary system information, remaining system information, a RAR response, an Msg4, and the like. For example, the signal received by the network device from the terminal device may include one or more of the following: a preamble sequence, an Msg3, an ACK message, an Msg5, and the like.

In an optional implementation, the signal includes an SSB; SSB indexes of SSBs sent by using the K first beams on each time domain resource are the same; and a quantity of SSB indexes of SSBs sent by using the L first beams on the $R_2$ time domain resources is equal to $R_2$. In other words, SSBs sent by the network device on a same time domain resource may use a same SSB index. Because time domain resources occupied for separately performing signal transmission by using the L first beams are reduced, in this implementation, a total quantity of SSB indexes required for separately sending an SSB by the network device by using the L first beams can be reduced, so that a quantity of bits occupied by an SSB index in information that is sent by the network device to the terminal device and that carries the SSB index can be reduced.

In an optional implementation, the K first beams on each time domain resource include $K_1$ first beams whose ground coverage is adjacent to each other in the L first beams, where $K_1$ is a positive integer less than or equal to K. There may be an overlapping region between two second beams whose ground coverage is adjacent to each other. A gain of the network device in the overlapping region is obtained by superposing gains of the two second beams respectively in the overlapping region. It can be learned that this implementation can increase the gain of the network device in the overlapping region, and can further increase a signal-to-noise ratio of a signal received by a terminal device in the overlapping region from the network device and a signal-to-noise ratio of a signal received by the network device from the terminal device in the overlapping region, thereby increasing a success rate of correctly demodulating a signal.

In an optional implementation, the K first beams on each time domain resource include $K_2$ first beams and $K_3$ first beams in the L first beams; a sum of $K_2$ and $K_3$ is less than or equal to K, and both $K_2$ and $K_3$ are positive integers less than K;

ground coverage of the $K_2$ first beams is not adjacent to ground coverage of the $K_3$ first beams; and a distance between the ground coverage of each of the $K_2$ first beams and a reference point of ground coverage of the L first beams is less than a distance between the ground coverage of each of the $K_3$ first beams and the reference point. In other words, the K first beams used on the same time domain resource may include the $K_2$ first beams that are closer to the reference point and the $K_3$ first beams that are farther from the reference point.

When the reference point is a location with a shortest distance from the network device in total ground coverage of the L first beams, a path loss of separately performing signal transmission by the network device by using the $K_2$ first beams is less than a path loss of separately performing signal transmission by using the $K_3$ first beams. This implementation helps the network device adjust beam power of the $K_2$ first beams to beam power of the $K_3$ first beams, to balance signal-to-noise ratios of receiving by a terminal device located in the ground coverage of the $K_2$ first beams and a terminal device located in the ground coverage of the $K_3$ first beams. Therefore, the signal-to-noise ratio of the signal received by the terminal device located in the ground coverage of the $K_3$ first beams can be increased on the premise that it can be ensured that the terminal device located in the ground coverage of the $K_2$ first beams can correctly demodulate a signal, thereby increasing a success rate of correctly demodulating the signal by the terminal device located in the ground coverage of the $K_3$ first beams.

In an optional implementation, an antenna array disposed on the network device may be a hybrid beamforming (hybrid beamforming, HBF) structure, a digital beamforming (digital beamforming, DBF) structure, or an analog beamforming (analog beamforming, ABF) structure with a plurality of radio frequency channels. The antenna arrays of these architectures may enable the network device to perform signal transmission with the terminal device through a plurality of radio frequency channels on a same time domain resource. The network device may alternatively use another antenna array that can enable the network device to perform signal transmission with the terminal device through a plurality of radio frequency channels on a same time domain resource. This is not limited.

In an optional implementation, a location of the network device at a first moment is different from a location of the network device at a second moment. The method further includes: For each of the L first beams, the network device adjusts a central direction of the first beam at the second moment based on ground coverage of the first beam at the first moment and a moving distance of the network device from the first moment to the second moment; and separately performs signal transmission with the terminal device at the second moment by using the L first beams with adjusted central directions. Optionally, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

In addition, the signal transmission method 200 is similar to a manner in which the network device performs signal transmission with the terminal device by using the M second beams on the $R_1$ time domain resources in the signal transmission method 100. For specific descriptions, refer to the related descriptions in the signal transmission method 100. Details are not described again.

In the signal transmission method 200, K first beams in the L first beams are used on each of the $R_2$ time domain resources, and the K first beams on each time domain resource are used to perform signal transmission through K radio frequency channels. When K is greater than 1, the network device may separately perform, through a plurality of radio frequency channels, signal transmission by using a plurality of first beams on a same time domain resource. Compared with a manner in which the network device occupies different time domain resources to separately perform signal transmission by using the L first beams, this reduces time domain resources occupied by the network device to separately perform signal transmission by using the L first beams. In other words, the method can reduce a duration for performing beam sweeping by the network device on the L first beams, and can further reduce an initial access delay of the terminal device in a scenario in which the method is applied to initial access of the terminal device.

FIG. 19 is a schematic flowchart of a signal transmission method 300 according to an embodiment of this application. The signal transmission method 300 is described from a perspective of interaction between a network device and a terminal device. This embodiment may be performed by the terminal device and the network device, or may be performed by components (for example, processors, chips, or chip systems) of the terminal device and the network device. The following uses an example in which the network device and the terminal device are execution bodies for description. The signal transmission method 300 includes the following steps.

S301: For each of L first beams with different directions, the network device adjusts a central direction of the first beam at a second moment based on ground coverage of the first beam at a first moment and a moving distance of the network device from the first moment to the second moment, where the first moment and the second moment are moments in a first periodicity.

In an optional implementation, there may be an interval of a period of time between the first moment and the second moment. In other words, a moving time of the network device may be discretized, and a central direction of a beam is adjusted after the network device moves for a period of time. In this way, the network device may not adjust the central direction of the beam in real time, so that calculation overheads of the network device can be reduced. In addition, in addition to a manner in which the network device adjusts a central direction of a beam based on ground coverage of the beam and a moving distance of the network device, a beam used by the network device at each moment may be designed offline and stored in the network device in advance. This helps reduce real-time calculation overheads of the network device.

S302: The network device separately performs signal transmission with the terminal device at the second moment by using the L first beams with adjusted central directions.

S303: The network device separately performs, by using the L first beams, signal transmission with the terminal device at a moment that is in a second periodicity and that corresponds to the first moment.

S304: The network device separately performs, by using the L first beams with the adjusted central directions, signal transmission with the terminal device at a moment that is in the second periodicity and that corresponds to the second moment.

The first periodicity and the second periodicity may be periodicities in which the network device performs beam sweeping. When the first periodicity is a 1st periodicity in which the network device performs beam sweeping, a beam used for signal transmission at a moment that is in a periodicity other than the second periodicity and that corresponds to the first moment may be the same as a beam used for signal transmission at the first moment, and a beam used for signal transmission at a moment corresponding to the second moment may be the same as a beam used for signal transmission at the second moment.

In addition, in steps S302 to S304, that the network device performs signal transmission with the terminal device may be that the network device sends a signal to the terminal device, or may be that the network receives a signal from the terminal device. For example, the signal sent by the network device to the terminal device may include one or more of the following: an SSB, primary system information, remaining system information, a RAR response, an Msg4, and the like. For example, the signal received by the network device from the terminal device may include one or more of the following: a Preamble sequence, an Msg3, an ACK message, an Msg5, and the like.

The signal transmission method 300 is similar to the signal transmission method 100 in which the network device adjusts, for each of the M second beams with different directions, the central direction of the second beam at the second moment based on the ground coverage of the second beam at the first moment and the moving distance of the network device from the first moment to the second moment. For specific descriptions, refer to the related descriptions in the signal transmission method 100. Details are not described again.

According to the signal transmission method 300, ground coverage of each of the L first beams at the second moment includes the ground coverage of the first beam at the first moment. Compared with a manner in which the network device does not adjust the central direction of the first beam at the second moment, the method can increase a signal-to-noise ratio of a signal that is received, from the network device at the second moment, by a terminal device located in the ground coverage of the first beam at the first moment, or increase a signal-to-noise ratio of a signal that is received by the network device at the second moment from the terminal device located in the ground coverage of the first beam at the first moment.

In addition, in this manner, ground coverage of a beam used by the network device to perform signal transmission at a moment corresponding to the second moment in the second periodicity may further include ground coverage of a beam used for signal transmission at a moment corresponding to the first moment. Therefore, before and after the network device moves in the second periodicity, terminal devices located in a same range can still correctly demodulate a signal from the network device, and the network device can correctly demodulate, before and after the movement, signals from the terminal devices located in a same range. In addition, the network device may not perform an operation of adjusting a central direction of a beam in the second periodicity, and directly uses a beam used at a corresponding moment in the first periodicity. This helps reduce calculation overheads of the network device.

To implement functions in the foregoing method provided in embodiments of this application, a network device or a terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

As shown in FIG. 20, an embodiment of this application provides a communication apparatus 2000. The communication apparatus 2000 may be a component (for example, an integrated circuit or a chip) in a network device. Alternatively, the communication apparatus 2000 may be another communication unit, configured to implement the method in the method embodiment of this application. The communication apparatus 2000 may include a communication unit 2001 and a processing unit 2002. The processing unit 2002 is configured to control the communication unit 2001 to perform data/signaling receiving and sending. Optionally, the communication apparatus 2000 may further include a storage unit 2003.

In a possible design, the processing unit 2002 is configured to determine M first beams from L first beams with different central directions, where L is an integer greater than 1, and M is an integer less than L and greater than 1.

The processing unit 2002 is further configured to separately broaden the M first beams to obtain M second beams, where the M second beams are in one-to-one correspondence with the M first beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

The communication unit 2001 is configured to separately perform signal transmission with a terminal device by using the M second beams.

In an optional implementation, when separately performing signal transmission with the terminal device by using the M second beams, the communication unit 2001 is specifically configured to separately perform signal transmission with the terminal device by using the M second beams on $R_1$ different time domain resources, where $R_1$ is a positive integer less than M.

N second beams in the M second beams are used on each of the $R_1$ time domain resources, and different second beams are used on different time domain resources in the $R_1$ time domain resources. The N second beams on each time domain resource are used to perform signal transmission through N radio frequency channels, where N is a positive integer less than or equal to M.

In an optional implementation, the signal includes a synchronization signal block SSB; SSB indexes of SSBs sent by using the N second beams on each time domain resource are the same; and a quantity of SSB indexes of SSBs sent by using the M second beams on the $R_1$ time domain resources is equal to $R_1$.

In an optional implementation, the N second beams used on each time domain resource include $N_1$ second beams whose ground coverage is adjacent to each other in the M second beams, where $N_1$ is a positive integer less than or equal to N.

In an optional implementation, the N second beams used on each time domain resource include $N_2$ second beams and $N_3$ second beams in the M second beams; a sum of $N_2$ and $N_3$ is less than or equal to N, and both $N_2$ and $N_3$ are positive integers less than N; ground coverage of the $N_2$ second beams is not adjacent to ground coverage of the $N_3$ second beams; and a distance between ground coverage of each of the $N_2$ second beams and a reference point of ground coverage of the M second beams is less than a distance between ground coverage of each of the $N_3$ second beams and the reference point.

In an optional implementation, a location of the communication apparatus 2000 at a first moment is different from a location of the communication apparatus 2000 at a second moment.

The processing unit 2002 is further configured to: for each of the M second beams, adjust a central direction of the second beam at the second moment based on ground coverage of the second beam at the first moment and a moving distance of the communication apparatus 2000 from the first moment to the second moment.

The processing unit 2002 is further configured to: determine M third beams from the L first beams based on an adjusted central direction of each of the M second beams at the second moment, and separately broaden the M third beams to obtain M fourth beams.

The communication unit 2001 is further configured to separately perform signal transmission with the terminal device at the second moment by using the M fourth beams.

In an optional implementation, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

This embodiment of this application and the foregoing signal transmission method 100 are based on a same concept, and bring same technical effect. For a specific principle, refer to the descriptions of the foregoing embodiment. Details are not described again.

In another possible design, the processing unit 2002 is configured to determine $R_2$ time domain resources.

The communication unit 2001 is configured to separately perform signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

In an optional implementation, the signal includes a synchronization signal block SSB; SSB indexes of SSBs sent by using the K first beams on each time domain resource are the same; and a quantity of SSB indexes of SSBs sent by using the L first beams on the $R_2$ time domain resources is equal to $R_2$.

In an optional implementation, the K first beams on each time domain resource include $K_1$ first beams whose ground coverage is adjacent to each other in the L first beams, where $K_1$ is a positive integer less than or equal to K.

In an optional implementation, the K first beams on each time domain resource include $K_2$ first beams and $K_3$ first beams in the L first beams; a sum of $K_2$ and $K_3$ is less than or equal to K, and both $K_2$ and $K_3$ are positive integers less than K; ground coverage of the $K_2$ first beams is not adjacent to ground coverage of the $K_3$ first beams; and a distance between the ground coverage of each of the $K_2$ first beams and a reference point of ground coverage of the L first beams is less than a distance between the ground coverage of each of the $K_3$ first beams and the reference point.

This embodiment of this application and the foregoing signal transmission method 200 are based on a same concept, and bring same technical effect. For a specific principle, refer to the descriptions of the foregoing embodiment. Details are not described again.

In still another possible design, the processing unit 2002 is configured to: for each of L first beams with different directions, adjust a central direction of the first beam at a second moment based on ground coverage of the first beam at a first moment and a moving distance of the network device from the first moment to the second moment, where the first moment and the second moment are moments in a first periodicity, and L is an integer greater than 1.

The communication unit 2001 is configured to separately perform signal transmission with a terminal device at the second moment by using the L first beams with adjusted central directions.

The communication unit 2001 is further configured to separately perform, by using the L first beams, signal transmission with the terminal device at a moment that is in a second periodicity and that corresponds to the first moment.

The communication unit 2001 is further configured to separately perform, by using the L first beams with the adjusted central directions, signal transmission with the terminal device at a moment that is in the second periodicity and that corresponds to the second moment.

This embodiment of this application and the foregoing signal transmission method 300 are based on a same concept, and bring same technical effect. For a specific principle, refer to the descriptions of the foregoing embodiment. Details are not described again.

An embodiment of this application further provides a communication apparatus 2100, as shown in FIG. 21. The communication apparatus 2100 may be a network device, or may be a chip, a chip system, a processor, or the like that supports the network device in implementing the foregoing method. The apparatus may be configured to implement the method described in the foregoing method embodiment. For details, refer to the descriptions in the foregoing method embodiment.

The communication apparatus 2100 may include one or more processors 2101. The processor may be configured to implement some or all functions of the network device or the terminal device by using a logic circuit or by running a computer program. The processor 2101 may be a general-purpose processor, a special-purpose processor, or the like. For example, the processor 2101 may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 2100 may include one or more memories 2102. The memory 2102 may store instructions 2104. The instructions may be run on the processor 2101, to enable the communication apparatus 2100 to perform the method described in the foregoing method embodiment. Optionally, the memory 2102 may further store data. The processor 2101 and the memory 2102 may be independently disposed, or may be integrated together.

The memory 2102 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 2100 may further include a transceiver 2105 and an antenna 2106. The transceiver 2105 may be referred to as a transceiver unit, a transceiver machine, a transceiver circuit, or the like, and is configured to implement a transceiver function. The transceiver 2105 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

In a possible design, the processor 2101 is configured to determine M first beams from L first beams with different central directions, where L is an integer greater than 1, and M is an integer less than L and greater than 1.

The processor 2101 is further configured to separately broaden the M first beams to obtain M second beams, where the M second beams are in one-to-one correspondence with the M first beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

The transceiver 2105 is configured to separately perform signal transmission with a terminal device by using the M second beams.

In an optional implementation, when separately performing signal transmission with the terminal device by using the M second beams, the transceiver 2105 is specifically configured to separately perform signal transmission with the terminal device by using the M second beams on $R_1$ different time domain resources, where $R_1$ is a positive integer less than M.

N second beams in the M second beams are used on each of the $R_1$ time domain resources, and different second beams are used on different time domain resources in the $R_1$ time domain resources. The N second beams on each time domain resource are used to perform signal transmission through N radio frequency channels, where N is a positive integer less than or equal to M.

In an optional implementation, the signal includes a synchronization signal block SSB; SSB indexes of SSBs sent by using the N second beams on each time domain resource are the same; and a quantity of SSB indexes of SSBs sent by using the M second beams on the $R_1$ time domain resources is equal to $R_1$.

In an optional implementation, the N second beams used on each time domain resource include $N_1$ second beams whose ground coverage is adjacent to each other in the M second beams, where $N_1$ is a positive integer less than or equal to N.

In an optional implementation, the N second beams used on each time domain resource include $N_2$ second beams and $N_3$ second beams in the M second beams; a sum of $N_2$ and $N_3$ is less than or equal to N, and both $N_2$ and $N_3$ are positive integers less than N; ground coverage of the $N_2$ second beams is not adjacent to ground coverage of the $N_3$ second beams; and a distance between ground coverage of each of the $N_2$ second beams and a reference point of ground coverage of the M second beams is less than a distance between ground coverage of each of the $N_3$ second beams and the reference point.

In an optional implementation, a location of the communication apparatus 2100 at a first moment is different from a location of the communication apparatus 2100 at a second moment.

The processor 2101 is further configured to: for each of the M second beams, adjust a central direction of the second beam at the second moment based on ground coverage of the second beam at the first moment and a moving distance of the communication apparatus 2100 from the first moment to the second moment.

The processor 2101 is further configured to: determine M third beams from the L first beams based on an adjusted central direction of each of the M second beams at the second moment, and separately broaden the M third beams to obtain M fourth beams.

The transceiver 2105 is further configured to separately perform signal transmission with the terminal device at the second moment by using the M fourth beams.

In an optional implementation, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

In another possible design, the processor 2101 is configured to determine $R_2$ time domain resources.

The transceiver 2105 is configured to separately perform signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

In an optional implementation, the signal includes a synchronization signal block SSB; SSB indexes of SSBs sent by using the K first beams on each time domain resource are the same; and a quantity of SSB indexes of SSBs sent by using the L first beams on the $R_2$ time domain resources is equal to $R_2$.

In an optional implementation, the K first beams on each time domain resource include $K_1$ first beams whose ground coverage is adjacent to each other in the L first beams, where $K_1$ is a positive integer less than or equal to K.

In an optional implementation, the K first beams on each time domain resource include $K_2$ first beams and $K_3$ first beams in the L first beams; a sum of $K_2$ and $K_3$ is less than or equal to K, and both $K_2$ and $K_3$ are positive integers less than K; ground coverage of the $K_2$ first beams is not adjacent to ground coverage of the $K_3$ first beams; and a distance between the ground coverage of each of the $K_2$ first beams and a reference point of ground coverage of the L first beams is less than a distance between the ground coverage of each of the $K_3$ first beams and the reference point.

In yet another possible design, the processor 2101 is configured to: for each of L first beams with different directions, adjust a central direction of the first beam at a second moment based on ground coverage of the first beam at a first moment and a moving distance of the network device from the first moment to the second moment, where the first moment and the second moment are moments in a first periodicity, and L is an integer greater than 1.

The transceiver 2105 is configured to separately perform signal transmission with a terminal device at the second moment by using the L first beams with adjusted central directions.

The transceiver 2105 is further configured to separately perform, by using the L first beams, signal transmission with the terminal device at a moment that is in a second periodicity and that corresponds to the first moment.

The transceiver 2105 is further configured to separately perform signal transmission with the terminal device at a moment corresponding to the second moment in the second periodicity by using the L first beams with the adjusted central directions.

In another possible design, the processor 2101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform signal transmission or transfer.

In still another possible design, optionally, the processor 2101 may store instructions 2103, and the instructions 2103 are run on the processor 2101, to enable the communication apparatus 2100 to perform the method described in the foregoing method embodiment. The instructions 2103 may be solidified in the processor 2101. In this case, the processor 2101 may be implemented by hardware.

In still another possible design, the communication apparatus 2100 may include a circuit, and the circuit may implement a sending, receiving, or communication function in the foregoing method embodiment. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal oxide semiconductor (nMetal-oxide-semiconductor, NMOS), a p-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

The communication apparatus described in the foregoing embodiments may be a network device or a terminal device. However, a scope of the communication apparatus described in embodiments of this application is not limited thereto, and a structure of the communication apparatus may not be limited by FIG. 21. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (modulator);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 22. The chip 2200 shown in FIG. 22 includes a processor 2201 and an interface 2202. There may be one or more processors 2201, and there may be a plurality of interfaces 2202. The processor 2201 may be a logic circuit, and the interface 2202 may be an input/output interface, an input interface, or an output interface. The chip 2200 may further include a memory 2203.

In a design, when the chip is configured to implement functions of the network device in embodiments of this application:

In a manner, the processor 2201 is configured to determine M first beams from L first beams with different central directions, where L is an integer greater than 1, and M is an integer less than L and greater than 1. The processor 2201 is further configured to separately broaden the M first beams to obtain M second beams, where the M second beams are in one-to-one correspondence with the M first beams. The interface 2202 is configured to separately perform signal transmission with a terminal device by using the M second beams.

A maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and the terminal device, and the second value corresponding to each of the plurality of channels is a minimum gain when a signal on the channel can be correctly demodulated.

In an optional implementation, when separately performing signal transmission with the terminal device by using the M second beams, the interface 2202 is specifically configured to separately perform signal transmission with the terminal device by using the M second beams on $R_1$ different time domain resources, where $R_1$ is a positive integer less than M. N second beams in the M second beams are used on each of the $R_1$ time domain resources, and different second beams are used on different time domain resources in the $R_1$ time domain resources. The N second beams on each time domain resource are used to perform signal transmission through N radio frequency channels, where N is a positive integer less than or equal to M.

In an optional implementation, the signal includes a synchronization signal block SSB; SSB indexes of SSBs sent by using the N second beams on each time domain resource are the same; and a quantity of SSB indexes of SSBs sent by using the M second beams on the $R_1$ time domain resources is equal to $R_1$.

In an optional implementation, the N second beams used on each time domain resource include $N_1$ second beams whose ground coverage is adjacent to each other in the M second beams, where $N_1$ is a positive integer less than or equal to N.

In an optional implementation, the N second beams used on each time domain resource include $N_2$ second beams and $N_3$ second beams in the M second beams; a sum of $N_2$ and $N_3$ is less than or equal to N, and both $N_2$ and $N_3$ are positive integers less than N; ground coverage of the $N_2$ second beams is not adjacent to ground coverage of the $N_3$ second beams; and a distance between ground coverage of each of the $N_2$ second beams and a reference point of ground coverage of the M second beams is less than a distance between ground coverage of each of the $N_3$ second beams and the reference point.

In an optional implementation, a location of the chip 2200 at a first moment is different from a location of the chip 2200 at a second moment.

The processor 2201 is further configured to: for each of the M second beams, adjust a central direction of the second beam at the second moment based on ground coverage of the second beam at the first moment and a moving distance of the chip 2200 from the first moment to the second moment.

The processor 2201 is further configured to: determine M third beams from the L first beams based on an adjusted central direction of each of the M second beams at the second moment, and separately broaden the M third beams to obtain M fourth beams.

The interface 2202 is further configured to separately perform signal transmission with the terminal device at the second moment by using the M fourth beams.

In an optional implementation, the first moment and the second moment are moments in a first periodicity; a beam used for signal transmission at a moment that is in a second periodicity and that corresponds to the first moment is the same as a beam used for signal transmission at the first moment; and a beam used for signal transmission at a moment that is in the second periodicity and that corresponds to the second moment is the same as a beam used for signal transmission at the second moment.

In another manner, the processor 2201 is configured to determine $R_2$ time domain resources. The interface 2202 is configured to separately perform signal transmission with a terminal device by using L first beams on the $R_2$ time domain resources. K first beams in the L first beams are used on each of the $R_2$ time domain resources, and different first beams are used on different time domain resources in the $R_2$ time domain resources. The K first beams on each time domain resource are used to perform signal transmission through K radio frequency channels, where L is an integer greater than 1, K is a positive integer less than or equal to L, and $R_2$ is a positive integer less than L.

In an optional implementation, the signal includes a synchronization signal block SSB; SSB indexes of SSBs sent by using the K first beams on each time domain resource are the same; and a quantity of SSB indexes of SSBs sent by using the L first beams on the $R_2$ time domain resources is equal to $R_2$.

In an optional implementation, the K first beams on each time domain resource include $K_1$ first beams whose ground coverage is adjacent to each other in the L first beams, where $K_1$ is a positive integer less than or equal to K.

In an optional implementation, the K first beams on each time domain resource include $K_2$ first beams and $K_3$ first beams in the L first beams; a sum of $K_2$ and $K_3$ is less than or equal to K, and both $K_2$ and $K_3$ are positive integers less than K; ground coverage of the $K_2$ first beams is not adjacent to ground coverage of the $K_3$ first beams; and a distance between the ground coverage of each of the $K_2$ first beams and a reference point of ground coverage of the L first beams is less than a distance between the ground coverage of each of the $K_3$ first beams and the reference point.

In still another manner, the processor 2201 is configured to: for each of L first beams with different directions,

26

adjust a central direction of the first beam at a second moment based on ground coverage of the first beam at a first moment and a moving distance of the network device from the first moment to the second moment, where the first moment and the second moment are moments in a first periodicity, and L is an integer greater than 1.

The interface 2202 is configured to separately perform signal transmission with a terminal device at the second moment by using the L first beams with adjusted central directions.

The interface 2202 is further configured to separately perform, by using the L first beams, signal transmission with the terminal device at a moment that is in a second periodicity and that corresponds to the first moment.

The interface 2202 is further configured to separately perform, by using the L first beams with the adjusted central directions, signal transmission with the terminal device at a moment that is in the second periodicity and that corresponds to the second moment.

In embodiments of this application, the communication apparatus 2100 and the chip 2200 may further perform the implementations of the communication apparatus 2000. A person skilled in the art may further understand that various illustrative logical blocks (illustrative logical block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing signal transmission method are based on a same concept, and bring same technical effect. For a specific principle, refer to the descriptions in the foregoing signal transmission method. Details are not described again.

A person skilled in the art may further understand that various illustrative logical blocks (illustrative logical block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, functions in any one of the foregoing method embodiments are implemented.

This application further provides a computer program product, configured to store computer software instructions. When the instructions are executed by a communication apparatus, functions in any one of the foregoing method embodiments are implemented.

This application further provides a computer program. When the computer program is run on a computer, functions in any one of the foregoing method embodiments are implemented.

This application further provides a communication system. The system includes at least one network device and at least one terminal device in the foregoing aspects. In another possible design, the system may further include another device that interacts with the network device and the terminal device in the solutions provided in this application.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, applied to a network device, wherein the method comprises:

   determining M first beams from L first beams with different central directions, wherein L is an integer greater than 1, and M is an integer less than L and greater than 1;
   separately broadening the M first beams to obtain M second beams, wherein the M second beams are in one-to-one correspondence with the M first beams, wherein
   a maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and a terminal device, and the second value corresponding to each of the plurality of channels is a minimum gain when a signal on the channel can be correctly demodulated; and
   separately performing signal transmission with the terminal device by using the M second beams.

2. The method according to claim 1, wherein separately performing signal transmission with the terminal device by using the M second beams comprises:

   separately performing signal transmission with the terminal device by using the M second beams on $R_1$ different time domain resources, wherein $R_1$ is a positive integer less than M, wherein
   N second beams in the M second beams are used on each of the $R_1$ time domain resources, and different second beams are used on different time domain resources in the $R_1$ time domain resources; and
   the N second beams on each time domain resource are used to perform signal transmission through N radio frequency channels, wherein N is a positive integer less than or equal to M.

3. The method according to claim 2, wherein the signal comprises a synchronization signal block SSB;

   SSB indexes of SSBs sent by using the N second beams on each time domain resource are the same; and
   a quantity of SSB indexes of SSBs sent by using the M second beams on the $R_1$ time domain resources is equal to $R_1$.

4. The method according to claim 2 or 3, wherein
   the N second beams used on each time domain resource comprise $N_1$ second beams whose ground coverage is adjacent to each other in the M second beams, wherein $N_1$ is a positive integer less than or equal to N.

5. The method according to any one of claims 2 to 4, wherein

   the N second beams used on each time domain resource comprise $N_2$ second beams and $N_3$ second beams in the M second beams, wherein a sum of $N_2$ and $N_3$ is less than or equal to N, and both $N_2$ and $N_3$ are positive integers less than N;
   ground coverage of the $N_2$ second beams is not adjacent to ground coverage of the $N_3$ second beams; and
   a distance between ground coverage of each of the $N_2$ second beams and a reference point of ground coverage of the M second beams is less than a distance between ground coverage of each of the $N_3$ second beams and the reference point.

6. The method according to any one of claims 1 to 5, wherein a location of the network device at a first moment is different from a location of the network device at a second moment; and the method further comprises:

   for each of the M second beams, adjusting a central direction of the second beam at the second moment based on ground coverage of the second beam at the first moment and a moving distance of the network device from the first moment to the second moment;
   determining M third beams from the L first beams based on an adjusted central direction of each of the M second beams at the second moment, and separately broadening the M third beams to obtain M fourth beams; and
   separately performing signal transmission with the terminal device at the second moment by using the M fourth beams.

7. The method according to claim 6, wherein the first moment and the second moment are moments in a first periodicity;

a beam used for signal transmission at a moment that is in a second periodicity and that corresponds to the first moment is the same as a beam used for signal transmission at the first moment; and
a beam used for signal transmission at a moment that is in the second periodicity and that corresponds to the second moment is the same as a beam used for signal transmission at the second moment.

8. A communication apparatus, wherein the apparatus comprises:

a processing unit, configured to determine M first beams from L first beams with different central directions, wherein L is an integer greater than 1, and M is an integer less than L and greater than 1, wherein
the processing unit is further configured to separately broaden the M first beams to obtain M second beams, wherein the M second beams are in one-to-one correspondence with the M first beams, wherein
a maximum gain of each of the M second beams is less than a maximum gain of a first beam corresponding to the second beam, and the maximum gain of each of the M second beams is greater than or equal to a first value; a width of each second beam whose gain is the first value in the M second beams is greater than a width of a first beam whose gain is the first value and that corresponds to the second beam; and the first value is a largest value in second values respectively corresponding to a plurality of channels between the network device and a terminal device, and the second value corresponding to each of the plurality of channels is a minimum gain when a signal on the channel can be correctly demodulated; and
a communication unit, configured to separately perform signal transmission with the terminal device by using the M second beams.

9. The apparatus according to claim 8, wherein when separately performing signal transmission by using the M second beams, the communication unit is specifically configured to:

separately perform signal transmission with the terminal device by using the M second beams on $R_1$ different time domain resources, wherein $R_1$ is a positive integer less than M, wherein
N second beams in the M second beams are used on each of the $R_1$ time domain resources, and different second beams are used on different time domain resources in the $R_1$ time domain resources; and
the N second beams on each time domain resource are used to perform signal transmission through N radio frequency channels, wherein N is a positive integer less than or equal to M.

10. The apparatus according to claim 9, wherein the signal comprises a synchronization signal block SSB;

SSB indexes of SSBs sent by using the N second beams on each time domain resource are the same; and
a quantity of SSB indexes of SSBs sent by using the M second beams on the $R_1$ time domain resources is equal to $R_1$.

11. The apparatus according to claim 9 or 10, wherein
the N second beams used on each time domain resource comprise $N_1$ second beams whose ground coverage is adjacent to each other in the M second beams, wherein $N_1$ is a positive integer less than or equal to N.

12. The apparatus according to any one of claims 9 to 11, wherein

the N second beams used on each time domain resource comprise $N_2$ second beams and $N_3$ second beams in the M second beams, wherein a sum of $N_2$ and $N_3$ is less than or equal to N, and both $N_2$ and $N_3$ are positive integers less than N;
ground coverage of the $N_2$ second beams is not adjacent to ground coverage of the $N_3$ second beams; and
a distance between ground coverage of each of the $N_2$ second beams and a reference point of ground coverage of the M second beams is less than a distance between ground coverage of each of the $N_3$ second beams and the reference point.

13. The apparatus according to any one of claims 8 to 12, wherein a location of the communication apparatus at the first moment is different from a location of the communication apparatus at the second moment;

the processing unit is further configured to: for each of the M second beams, adjust a central direction of the second beam at the second moment based on ground coverage of the second beam at the first moment and a moving distance of the communication apparatus from the first moment to the second moment;

the processing unit is further configured to: determine M third beams from the L first beams based on an adjusted central direction of each of the M second beams at the second moment, and separately broaden the M third beams to obtain M fourth beams; and

the communication unit is further configured to separately perform signal transmission with the terminal device at the second moment by using the M fourth beams.

14. The apparatus according to claim 13, wherein the first moment and the second moment are moments in a first periodicity;

a beam used for signal transmission at a moment that is in a second periodicity and that corresponds to the first moment is the same as a beam used for signal transmission at the first moment; and

a beam used for signal transmission at a moment that is in the second periodicity and that corresponds to the second moment is the same as a beam used for signal transmission at the second moment.

15. A communication apparatus, comprising a memory and a processor, wherein

the memory is configured to store instructions or a computer program; and

the processor is configured to execute the computer program or the instructions stored in the memory, so that the communication apparatus is enabled to perform the method according to any one of claims 1 to 7.

16. A communication system, comprising the communication apparatus according to any one of claims 8 to 14.

17. A computer-readable storage medium, wherein the computer-readable storage medium is configured to store instructions, and when the instructions are run on a computer, the method according to any one of claims 1 to 7 is performed.

18. A computer program product comprising instructions, wherein when the computer program product runs on a computer, the method according to any one of claims 1 to 7 is performed.

N3GPP access:

Terminal device ←- - - N3GPP radio protocol - - -→ Transparent forwarding satellite ←- - - N3GPP radio protocol - - -→ N3IWF + Satellite hub ←NG(=N2/N3)→ 5G core network ←N6→ Data network

NR access:

Handheld or internet of things device ←- - - NR radio protocol - - -→ Transparent forwarding satellite (=RF repeater) ←- - - NR radio protocol - - -→ Base station ←NG(=N2/N3)→ 5G core network ←N6→ Data network

N3GPP: non-3rd generation partnership project
N3IWF: non-3GPP interworking function
5G: 5th generation
NR: new radio

FIG. 1

EP 4 622 132 A1

NR radio protocol

Handheld or internet of things device

Regenerative satellite (including a base station/DU)

F1 interface

Base station/CU

NG(=N2/N3)

5G core network

N6

Data network

DU: data unit
CU: control unit
5G: 5th generation
NR: new radio

FIG. 2

FIG. 3

FIG. 4

Directivity (decibel, dB)

Sidelobe attenuation is greater than 24 dB

3 dB attenuation is about 1.5°

Angle

FIG. 5

Network device

Terminal device

The network device sends a synchronization signal block SSB and master system information to the terminal device

Downlink synchronization beam

The network device sends remaining system information to the terminal device

Beams are consistent

The network device receives a preamble sequence from the terminal device

The network device sends a random access response RAR to the terminal device

Uplink access beam

The network device receives a message 3 (Msg3) from the terminal device

The network device sends a message 4 (Msg4) to the terminal device

The network device receives an acknowledgment ACK and a message 5 (Msg5) from the terminal device

FIG. 6

Time

...

20
milliseconds
(ms)

5 ms

| SSB #7 |
| SSB #6 |
| SSB #5 |
| SSB #4 |
| SSB #3 |
| SSB #2 |
| SSB #1 |
| Synchronization signal block SSB #0 |

FIG. 7

FIG. 8

Time

20 ms

5 ms

| SSB #1023 |
| SSB #1022 |
| SSB #1021 |
| SSB #1020 |
| SSB #1019 |
| SSB #1018 |
| SSB #1017 |
| SSB #1016 |

...

2560 ms

20 ms

5 ms

| SSB #15 |
| SSB #14 |
| SSB #13 |
| SSB #12 |
| SSB #11 |
| SSB #10 |
| SSB #9 |
| SSB #8 |

20
milliseconds
(ms)

5 ms

| SSB #7 |
| SSB #6 |
| SSB #5 |
| SSB #4 |
| SSB #3 |
| SSB #2 |
| SSB #1 |
| Synchronization signal block SSB #0 |

FIG. 9

FIG. 10

EP 4 622 132 A1

Signal transmission method 100

| Network device | | Terminal device |
|---|---|---|

S101: The network device determines M first beams from L first beams with different central directions, where L is an integer greater than 1, and M is an integer less than L and greater than 1

S102: The network device separately broadens the M first beams to obtain M second beams, where the M second beams are in one-to-one correspondence with the M first beams

S103: The network device separately performs signal transmission with the terminal device by using the M second beams

FIG. 11

Maximum gain of the first beam

First value

| First beam |
|---|

| Second beam |
|---|

FIG. 12

FIG. 13

Reference point

FIG. 14

Gain

Second beam #1

Second beam #2

Composite envelope

Angle

FIG. 15

FIG. 16

FIG. 17

Signal transmission method 200

| Network device | | Terminal device |

S201: The network device determines $R_2$ time domain resources

S202: The network device separately performs signal transmission with the terminal device by using L first beams on the $R_2$ time domain resources, where K first beams in the L first beams are used on each of the $R_2$ time domain resources, and different first beams are used on different time domain resources in the $R_2$ time domain resources; and the K first beams on each time domain resource are used to perform signal transmission through K radio frequency channels, where L is an integer greater than 1, K is a positive integer less than or equal to L, and $R_2$ is a positive integer less than L

FIG. 18

Signal transmission method 300

| Network device | | Terminal device |

S301: For each of L first beams with different directions, the network device adjusts a central direction of the first beam at a second moment based on ground coverage of the first beam at a first moment and a moving distance of the network device from the first moment to the second moment, where the first moment and the second moment are moments in a first periodicity

S302: The network device separately performs signal transmission with the terminal device at the second moment by using the L first beams with adjusted central directions

S303: The network device separately performs, by using the L first beams, signal transmission with the terminal device at a moment that is in a second periodicity and that correspond to the first moment

S304: The network device separately performs, by using the L first beams with the adjusted central directions, signal transmission with the terminal device at a moment that is in the second periodicity and that corresponds to the second moment

FIG. 19

FIG. 20

FIG. 21

FIG. 22

## INTERNATIONAL SEARCH REPORT

| International application No. |
|---|
| **PCT/CN2023/136115** |

**A.    CLASSIFICATION OF SUBJECT MATTER**

H04B7/185(2006.01)i

According to International Patent Classification (IPC) or to both national classification and IPC

**B.    FIELDS SEARCHED**

Minimum documentation searched (classification system followed by classification symbols)

IPC：H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 基站, 网络设备, 波束, 宽度, 调整, 增加, 展宽, 增益, 非地面网络, 扫描, NTN, BS, base station, network, beam, sweep, width, adjust, gain, increase

**C.    DOCUMENTS CONSIDERED TO BE RELEVANT**

| Category* | Citation of document, with indication, where appropriate, of the relevant passages | Relevant to claim No. |
|---|---|---|
| A | CN 112787695 A (SHANGHAI HUAWEI TECHNOLOGIES CO., LTD.) 11 May 2021 (2021-05-11)<br>description, paragraphs [0005]-[0036] | 1-18 |
| A | KR 20180036602 A (SAMSUNG ELECTRONICS CO., LTD.) 09 April 2018 (2018-04-09)<br>entire document | 1-18 |
| A | WO 2020238922 A1 (HUAWEI TECHNOLOGIES CO., LTD.) 03 December 2020 (2020-12-03)<br>entire document | 1-18 |
| A | WO 2022061827 A1 (HUAWEI TECHNOLOGIES CO., LTD.) 31 March 2022 (2022-03-31)<br>entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 January 2024** | **15 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136115**

| Patent document cited in search report | | | Publication date (day/month/year) | Patent family member(s) | | | Publication date (day/month/year) |
|---|---|---|---|---|---|---|---|
| CN | 112787695 | A | 11 May 2021 | None | | | |
| KR | 20180036602 | A | 09 April 2018 | KR | 102357670 | B1 | 03 February 2022 |
| WO | 2020238922 | A1 | 03 December 2020 | None | | | |
| WO | 2022061827 | A1 | 31 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211638653